(19) Europäisches Patentamt
European Patent Office
Office européen des brevets

(11) EP 2 762 382 B1

(12) **EUROPEAN PATENT SPECIFICATION**

(45) Date of publication and mention of the grant of the patent:
**05.07.2017 Bulletin 2017/27**

(21) Application number: **12835240.8**

(22) Date of filing: **14.05.2012**

(51) Int Cl.:
***B61L 27/00*** *(2006.01)* ***G06Q 10/06*** *(2012.01)*
*G06Q 50/30* *(2012.01)*

(86) International application number:
**PCT/JP2012/062337**

(87) International publication number:
**WO 2013/046792 (04.04.2013 Gazette 2013/14)**

(54) **RESOURCE MANAGEMENT PLAN CREATION DEVICE, METHOD THEREOF, AND PROGRAM**

VORRICHTUNG ZUR ERZEUGUNG EINES RESSOURCENVERWALTUNGSPLANS, VERFAHREN DAFÜR UND PROGRAMM

DISPOSITIF DE CRÉATION DE PLAN DE GESTION DE RESSOURCES, PROCÉDÉ ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2011 JP 2011211517**

(43) Date of publication of application:
**06.08.2014 Bulletin 2014/32**

(73) Proprietor: **Hitachi, Ltd.**
**Tokyo 100-8280 (JP)**

(72) Inventors:
- **TOMIYAMA Tomoe**
  **Tokyo 100-8280 (JP)**
- **SATO Tatsuhiro**
  **Tokyo 100-8280 (JP)**
- **IWAMURA Shigeki**
  **Tokyo 100-8280 (JP)**

(74) Representative: **Moore, Graeme Patrick et al**
**Mewburn Ellis LLP**
**City Tower**
**40 Basinghall Street**
**London EC2V 5DE (GB)**

(56) References cited:
**EP-A1- 1 847 435** **JP-A- H02 200 567**
**JP-A- H09 244 706** **JP-A- H11 143 938**
**JP-A- 2004 224 290** **JP-A- 2010 285 053**
**JP-A- 2010 285 053** **US-A- 5 828 979**

- **CHENG Y ED - GRABOT BERNARD SCHLEGEL THOMAS: "Hybrid simulation for resolving resource conflicts in train traffic rescheduling", COMPUTERS IN INDUSTRY, ELSEVIER SCIENCE PUBLISHERS. AMSTERDAM, NL, vol. 35, no. 3, 1 April 1998 (1998-04-01), pages 233-246, XP004123781, ISSN: 0166-3615, DOI: 10.1016/S0166-3615(97)00071-7**
- **GEISTLER A ET AL: "MISTRAL - KURZ- UND MITTELFRISTIGE FARZEUG-UMLAUFPLANUNG FUER DIE NMBS-SNCB", SIGNAL + DRAHT, TELZLAFF VERLAG GMBH. DARMSTADT, DE, vol. 99, no. 9, 1 September 2007 (2007-09-01), pages 22-26, XP001542772, ISSN: 0037-4997**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 762 382 B1

**Description**

Technical Field

The present invention relates to a resource management plan creation device, a resource management plan creation method, and a resource management plan creation program. More specifically, the present invention relates to technique that enables to create the resource management plan for managing the resource, for example, a moving medium (vehicle and airframe), crew members in transport services, especially railroad and aviation industries in consideration of the management completion site of the resource.

Background Art

In transport service such as railroad and aviation, a maintenance work plan of resources (moving media) used for operation and an operation plan for crews are considered in parallel with the management of an operation schedule. For example, as for a railroad, a period of vehicular inspection is legally prescribed so that inspection work is required to be regularly executed to adhere to the inspection period while efficiently allocating the vehicle to the train. The continuous duty periods and work hours of the crew members are legally prescribed that have to be posted to the duty on board while following the legal approach. Such a plan in consideration of the resource management will be hereinafter referred to as "resource management plan".

In the resource management plan for the railroad, a vehicle allocated to the train is required to be selected out of massive combination, considering a characteristic of an individual vehicle such as a type and the performance, the timing of a shuttle at a station, the time of return to a car depot for inspection and the like. It is manually difficult work. Likewise, in the crew member management plan, the crew member to work on board of the train is required to be selected out of massive combination, considering each characteristic of the crew member such as working conditions and the duty histories, a time taken for transfer or transfer timing, and break time. However, the creation of the resource management plan for the railroad is not sufficiently systematized with respect to the vehicle and the crew members. For this reason, the manual creation relies on experiences of experts.

Various ideas for automatically creating the resource management plan have been proposed. For example, Patent Document 1 and Non-Patent Document 1 provide a means to recreate a resource management plan also in consideration of an inspection period based on a train timetable changed to recover from disruptions. Patent Document 2 provides a means to find a location in which unscheduled inspection work can be executed based on inquiry about the connection of trains, and to create a resource management plan into which an extraordinary inspection work is inserted. Patent Document 3 provides a means to accept a desirable pattern from a user about a shuttle of a train and a vehicle allocated to a train, and to create the resource management plan in consideration of the intention of a user about connection of trains.

Prior Art Documents

Patent Document

Patent Document 1: JP-A-2010-58771
Patent Document 2: JP-A-2005-259052
Patent Document 3: JP-A-2003-154939

Non-Patent Document

Non-Patent Document 1: "Freight Train Locomotive Rescheduling Problem after Disruptions" by Keisuke Sato and Naoto Fukumura, IPSJ SIG Notes 2009 (19), 141-144, 2009-02-26 Furthermore the Patent Document JP-2010-285053 A discloses a device which replans once there are deviations from the timetable.

Summary of Invention

Problem to be solved by the Invention

When a resource management plan is created, it is important not only to meet characteristics of vehicles and crew members, and an operation schedule but to secure the regularity of management (so called management pattern).

For example, in case of the railroad, a vehicle expected to have large-scale inspection is stored in a car depot all day before the inspection as a spare vehicle, and a period for a deposit as a spare vehicle is intentionally considered so as to equalize travel distances and running days among multiple vehicles. Such regularity is an important element not only to execute periodic maintenance work but to enable usual maintenance work and usual vehicle storage work on the spot. Likewise, for the crew member, there is a management pattern intended to regularly allocate the day off and to equalize the time for duty on board.

In order to change the plan during disruptions, it is important to retain the location where the operation of the resource is completed (deposit site) in a day, or the number of resources intended to have the management completed at least on the same site, which are specified in the original plan so as not to disturb the management pattern next day onward. For example, in the case of the railroad, the vehicle having its management of the day completed is stored in the station yard at which the management of the vehicle is completed or in the adjacent car depot so as to start the management from the site on the following day. If the operational schedule is disrupted, the station where the management of the vehicle is completed (management completion site) is changed. The train different from the one specified in the original plan has to be allocated to the vehicle on the next day, thus causing interruption with the management pattern and omission of executing the inspection work. In order to prevent the aforementioned problem, the railroad operator takes the measure to return the vehicle as a deadhead train having the management completion station changed to the station as specified in the original plan if necessary, thus causing lower resource management efficiency.

The technique as disclosed in the aforementioned documents is intended to create the management plan, aiming at efficient management in the time range to be planed, however, the conditions for the deposit site are not considered.

It is an object of the present invention to provide a resource management plan creation device, method, and program thereof without changing the management completion site from the original plan.

Solution to Problem

Preferably, a resource management plan creation device is configured to be realized by a computer which includes a storage unit for storing information, an output unit for outputting the information, an input unit for inputting the information, and a processing unit for executing a program, wherein the storage unit stores operation schedule information of a transport service, and wherein the processing unit executes the program to provide: an operation schedule read unit for reading the operation schedule information of the transport service preliminarily stored in the storage unit, a network creation unit which creates a network model for transport routes by generating a node having at least a starting site, a start time, a terminal site and a termination time of each transport route as attributes, and generating each path for connecting nodes representing each transport route that allows a continuous operation using a same resource based on the attributes of the respective nodes with respect to multiple transport routes contained in the operation schedule based on the operation schedule information, generates a management starting node with at least information for identifying a management starting site of each resource and a vehicle as the attributes, and a management completion node with at least information for identifying each management completion site and each resource as the attributes, generates each path for connecting the nodes representing each transport route that allows allocation of the resource represented by the management starting node, and the management starting node based on the attributes of the management starting node and the other node, generates each path for connecting the nodes which have values of the attributes of the management completion site of the management completion node accorded with those of the terminal site of the other node, and generates each path for connecting the management starting node and the management completion node having the same resource identification information as the attribute, which are added to the generated network model, a merge candidate determination unit for extracting transport routes as a candidate to which multiple resources are allocated to achieve a condition that the management completion site of each resource is not changed from an original plan based on the operation schedule information, a merge candidate incorporating unit which adds paths for connecting each merge train node and the other nodes to the network model by generating each merge node through reproduction of the node representing the transport route which allows allocation of the multiple resources based on the attributes of the merge nodes and other nodes which constitute the network model, and a plan creation unit which extracts a path combination constituting multiple paths capable of allocating one resource to the respective nodes other than the merge nodes that forms the network model, and allocating the resource to each of the multiple paths that form the extracted combination so as to create and output the resource management plan that meets a condition that does not change management completion sites from the original plan.

Preferably, a resource management plan creation method is realized by a computer which includes a storage unit for storing operation schedule information of a transport service, an output unit for outputting information, an input unit for inputting the information, and a processing unit for executing a program. Through an operation of the processing unit to execute the program, the method includes the steps of reading the operation schedule information stored in the storage unit, based on the operation schedule with respect to each of multiple transport routes contained in the operation schedule, providing a network model for transport routes by generating a node with at least a starting site, a start time, a terminal site and termination time of each transport route as attributes, and generating each path for connecting the nodes representing each transport route that allows continuous operation using the same resource based on the attributes of the respective nodes, generating a management starting node with at least information for identifying a management starting site of each resource and a vehicle, and a management completion node with at least information for identifying each management completion site and each resource as the attributes, generating each path for connecting the nodes representing each transport route that allows allocation of the resource represented by the management starting node and the management starting node, generating each path for connecting the nodes which have values of the attributes of the management completion node at the management completion site accorded with those of the other node at a completion site, and generating each path for connecting the management starting node and the management completion node each having the same resource identification information as the attribute, which are added to the generated network model, and extracting transport routes as a candidate for allocating multiple resources to achieve a condition that does not change the management completion site of each resource from the original plan based on the operation schedule information, generating each merge node by reproducing the node representing each transport route that allows allocation of multiple resources, adding paths for connecting each merge train node and the other nodes based on the attributes of the merge node and the other nodes constituting the network model, extracting a path combination that constitutes multiple paths that allow allocation of one resource to the nodes other than the merge nodes constituting the network model from the network model, and creating and outputting the resource management plan to meet the condition that does not change the management completion site from the original plan by allocating the resource to each of the multiple paths constituting the combination.

The program for creating the resource management plan according to the present invention is configured as a program executable on a computer to create the resource management plan.

Advantageous Effects of the Invention

The present invention allows creation of the management plan without changing the resource management completion site or the number of resources which stay in the management completion site from the original plan.

Brief Description of Drawings

FIG. 1 shows a structure of a resource management plan creation device according to an embodiment of the present invention.
FIG. 2 is a flowchart showing a basic procedure for processing the resource management plan creation device.
FIG. 3A shows an example of a train operation schedule.
FIG. 3B shows an example of train allocation to the train sets of the operation schedule of the train.
FIG. 4 shows a configuration of the mergeable site information record and an example of data that belong to the record.
FIG. 5 shows a configuration of a merge candidate information record and an example of data that belong to the record.
FIG. 6 shows an example of a network model representing a management plan.
FIG. 7 shows an example of a network model representing the management plan to which the merge trains are added.
FIG. 8 shows an example of solution for the management plan represented by the network model.
FIG. 9 shows an example of an output screen of the resource management plan creation device.
FIG. 10 is a flowchart showing a procedure for creating the network model.
FIG. 11 is a flowchart showing a procedure for determining the merge candidate.
FIG. 12A shows an example of suspension of the operation.
FIG. 12B shows an example of suspension of the operation.
FIG. 13 is a flowchart showing a procedure for creating the management plan.
FIG. 14 is a flowchart showing a procedure for determining the merge candidate.
FIG. 15A shows an example of the train operation schedule.
FIG. 15B shows an example of the train allocation to the respective train sets according to the train operation schedule.
FIG. 16 is a flowchart showing a procedure for determining the merge candidate.
FIG. 17 is a flowchart showing a procedure for creating the management plan.

Mode for carrying out the Invention

Embodiments according to the present invention will be described referring to the drawings, taking vehicular management in a railroad application as an example.

First Embodiment

FIG. 1 is a block diagram showing an example of the configuration of a resource management plan creation device.

A resource management plan creation device 1000 is configured by a computer which includes a memory 1001, a storage unit 1100, a display unit 1200, an input unit 1201, a processing unit (CPU) 1202, a communication unit 1203, and a data bus 1204 that connects those elements. The resource management plan creation device 1000 is connected to an external terminal device and the like via a communication network.

The display unit 1200 is an output unit such as a liquid crystal display for visualizing the information, and configured to display the information to a user such as a state and a result of the process executed by the resource management plan creation device 1000. The input unit 1201 is a device such as a keyboard and a mouse configured to accept the input from the user for inputting an instruction to the computer. The processing unit 1202 executes various programs stored in the memory 1001. The communication unit 1203 exchanges various data and commands with another device via a local area network (LAN) and others. The storage unit 1100 stores various data for the resource management plan creation device 1000 to execute the process. The memory 1001 holds various programs 1002 and temporary data for the resource management plan creation device 1000 to execute the process.

The storage unit 1100 stores original route information 1, operation information 2, resource information 3, route information 4, mergeable site information 5 and merge candidate information 6.

The memory 1001 stores the program 1002 which is executed by the processing unit 1202 to realize various function units including an operation schedule read unit 1003, a network creation unit 1004, a merge candidate determination unit 1005, a merge candidate incorporating unit 1006, and a plan creation unit 1007.

The operation schedule read unit 1003 reads the operation information 2 stored in the storage unit 1100. The network creation unit 1004 creates a network model representing the resource management plan based on the operation information read by the operation schedule read unit 1003. The network model will be described in detail later referring to FIG. 6.

The merge candidate determination unit 1005 calculates the management completion station for each resource based on the operation information read by the operation schedule read unit 1003, and determines a route as the candidate to which multiple resources are allocated based on the calculated result.

The merge candidate incorporating unit 1006 changes the network model created by the network creation unit 1004 based on the route determined by the merge candidate determination unit 1005 as being the candidate to which the multiple resources are allocated. The changed network model will be described in detail referring to FIG. 7.

The plan creation unit 1007 generates constraint conditions based on the network model which has been created by the network creation unit 1004 and changed by the merge candidate incorporating unit 1006, creates the resource management plan to meet the resultant constraint conditions, and present the created resource management plan to the user via the display unit 1200.

FIG. 2 is a flowchart showing a basic procedure for processing operations of the resource management plan creation device 1000.

An outline of the operation procedure will be described.

The operation schedule read unit 1003 reads the operation information 2 stored in the storage unit 1100 (S201). The network creation unit 1004 creates the network model representing the management plan of the resource such as the vehicle based on the operation schedule read by the operation schedule read unit 1003 (S202). The network model to be generated will be described in detail referring to FIG. 6, and the method of generating the network model will be described in detail referring to FIG. 10.

The merge candidate determination unit 1005 determines the routes (hereinafter referred to as a merge candidate) as the candidates to which multiple resources are allocated based on the operation schedule read in S201 and the mergeable site information 5 stored in the storage unit 1100 (S203). In the case of railroad, for example, the determination is made with respect to the train as the merge train candidate. The merge train represents the one formed by connecting multiple train sets so as to run as the single train. The train set represents a set of multiple vehicles allocated to the train. The merge candidate determination method will be described in detail referring to FIG. 11.

The merge candidate determination unit 1005 determines whether there is the trains determined as the merge candidates in S203. If there is at least one candidate, the process S205 is executed for incorporating the merge candidates to the network model created in S202. If there is no merge candidate, the process S206 is executed for creating the resource management plan (S204).

The merge candidate incorporating unit 1006 adds nodes representing the trains as the merge candidates determined in S203 and links to the network model created in S202 (S205). The network model to which the merge candidates are added will be described in detail referring to FIG. 7.

The plan creation unit 1007 generates a mathematical model formulated as the vehicle routing problem based on the network model created in a series of processes from S201 to S205, and creates the resource management plan which meets conditions represented by the mathematical model (S206). The mathematical model to be created and the plan creation procedure will be described in detail referring to FIG. 13. The plan creation unit 1007 displays the resultant resource management plan created in S206 on the display unit 1200 (S207) for informing the user. If the multiple plans are created in S206, all the resultant plans will be displayed.

Various types of information 1 to 6 treated in the embodiment will be described, and the respective processing units 1003 to 1007 of the resource management plan creation device 1000 will be described in detail.

The original route information 1 relates to the route which has been planned before starting the operation, and the item is formed by adding the starting station and terminal station for the respective trains to that of the subsequent route information 4.

The operation information 2 represents the one which defines the route for each minimum unit of the transport service. For example, the train is the minimum unit of the transport service in the railroad, which is defined by the station at which the train stops or bypasses between the starting station and the terminal station, the arrival-departure time or passing time at each station.

The resource information 3 defines the resource used for the transport service. For example, the resource information of the railroad includes the one about the vehicle and the crew. For example, the information that defines the vehicle is represented by the vehicle name or identification number for uniquely identifying the vehicle, the maintenance work (inspection and cleaning) expected to be carried out on the day of operation, the time at which the maintenance work may be carried out, the maintenance work site, and the route identification number for uniquely identifying the transport service (corresponding to the train in the case of railroad), which is allocated to the vehicle.

The route information 4 defines the order of executing the minimum units of the transport service by the single resource. In the case of railroad, the route information is formed by listing the train information allocated to the single train set in consideration of turn back operation, and pull-in/pull-out of the car depot (FIG. 3A). The train information represents the train name or the train ID for uniquely identifying the train. For example, FIG. 3B represents allocation of trains to three train sets. Specifically, the single train set is allocated to the trains 1, 4 and 8. Likewise, the single train set is allocated to the trains 2, 5, 7, and another single train set is allocated to the trains 3, 6 and 10, respectively.

The mergeable site information 5 defines the site which allows the work of merging or separating the multiple resources. For example, in the case of railroad, the mergeable site information defines the station that allows merging or separation of the multiple train sets, or the station linked to the car depot. FIG. 4 shows an example of the mergeable site information 5 in the case of railroad, for example. A target track 51 stores the ID or the track name for uniquely identifying the track to be defined. A mergeable site 52 denotes the station which belongs to the track identified by the target track 51, and stores the ID or the station name for uniquely identifying the station which allows execution of the merging work. A separable site 53 denotes the station that belongs to the track identified by the target track 51, and stores the ID or the station name for uniquely identifying the station that allows the separation work. For example, records 54 indicate that the stations A and C among those belong to the track A allow the merging work, and the station C allows the separation work.

The merge candidate information 6 stores the route determined as the merge candidate by the merge candidate determination unit 1005, or the preliminarily determined merge candidate, if any. In the case of railroad, it is the information for defining the train as the merge candidate. FIG. 5 shows an example of the merge candidate information. A merging section 61 stores the section between stations, on which the train runs as the merge train. A merge candidate 62 stores the train as the merge candidate. A mergeable number 63 stores the maximum number of the mergeable train sets as the merge train. For example, the record 64 represents that the maximum of two additional train sets can be merged with the original train set to form the train 5 which may run on the merging section between stations A and C.

The relevant operation of the embodiment will be described referring to FIGS. 3A and 3B. The model of the resource management plan will be described referring to FIG. 6. Then each function and operation of the respective processing units of the resource management creation device 1000 will be described in detail referring to FIGS. 7 to 13. The embodiment assumes the work for rescheduling the vehicle management which is carried out when the operation of trains disrupts. The rescheduling for the vehicle management is carried out when the accident or failure of the vehicle unexpectedly change the train operation schedule by changing the allocation of the vehicle to the train in accordance with the changed operation schedule. A means for changing the allocation of the vehicle includes a means for changing the train allocated at the terminal station, a means for temporarily pulling out the spare train that stays in the car depot, and a means for temporarily storing the vehicle in the car depot. The vehicle is required by law to be regularly inspected in accordance with the travel distances and running days. In rescheduling the vehicle management, the vehicle allocation is changed by combining the aforementioned means in consideration of the inspection which is determined so as not to exceed the inspection cycle.

<Description of Work>

FIG. 3 shows charts used in the transport service of railroad and data used in this embodiment as the example.

FIG. 3A shows an example of the operation schedule of trains. The operation schedule of trains is generated based on the operation information 2. A vertical axis 31 in FIG. 3A denotes stations, and a horizontal axis 32 denotes time. One train is represented by drawing a line from a starting station to a terminal station of the train with the passage of time (referred to as a train line). For example, a thick line 33 represents one train that leaves the station C about six o'clock and arrives at the station A about six thirty.

A line segment 34 that connects two train lines represents a group of trains allocated to one train set. For example, referring to an example shown in FIG. 3B, the trains 1, 4 and 8 are connected as a group of series of trains, which means that the single train set runs in the order of these. A mark represented by "○" such as a sign 35 denotes timing at which the train set is pulled out of the car depot. For example, the sign 35 shows that the train set is pulled out of the car depot adjacent to the station C in accordance with departure of the train 1. As a sign 36 shows, a mark represented by "Δ" represents timing at which the train set is stored in the car depot. For example, the sign 36 shows that after the train 6 arrives, the train set allocated to the vehicle 6 is stored is stored in the car depot adjacent to the station A.

FIG. 3B shows the allocation of the trains to the respective train sets. The train allocation is made based on the resource information 3 and the route information 4. FIG. 3B is expressed with a horizontal axis 41, a train set name 42, and allocation information 43.

The axis 41 denotes time, and the train set name 42 denotes the name for uniquely identifying the train set. The allocation information 43 denotes the allocation of the vehicle to the train set indicated by the train set 42. Each train to be allocated is represented by one horizontal bar (for example, a horizontal bar 44), and a train name (for example, train name 45) is put aside the horizontal bar. If the train set is expected to have the maintenance work such as cleaning and inspection, the sign indicating the expected work is displayed. For example, a sign 46 represents that the train set C is expected to have the maintenance work, specifically, an inspection A after running as the train 6.

A series of route information will be described, taking a record 47 as an example. The record 47 denotes a route allocated to the train set C, representing that after it runs as the train 3, it then runs as the train 6, and after work of the inspection A is done, it runs as the train 10. FIG. 3A shows that the train 6 is stored in the car depot adjacent to the station A after the run, and the train 10 is pulled out of the car depot adjacent to the station A. Therefore, it is known that after the train set C is once stored in the car depot after it runs as the trains 3 and 6, it is pulled out of the car depot again and runs as the train 10.

<Network model>

FIG. 6 shows the network model of the resource management plan. In an example shown in FIG. 6, some links are omitted for simplicity. FIG. 6 shows the network model representing a candidate that can be formed into the route, which includes a train set node, a train node, an end node, a connection link and an end link.

(1) Train Set Node

The train set node represents a train set to which the route is allocated. One train set node is set per train set. The train set node has start time in a time zone in which the train set is available, termination time in a time zone in which the train set is available, a position in which the train set is kept standby at operation start time (a station adjacent to the car depot where the train set is kept standby or a station where it is kept standby), a starting station and a terminal station of the route in the original plan as attributes.

(2) Train Node

The train node represents a train included in the operation schedule. One train node is set per one train. The train node has a starting station, a terminal station, start time and termination time of the train as attributes.

(3) End Node

The end node represents an end of the route. One end node is set per one train set. The end node has a train set name or train set ID for uniquely identifying the train set, and a terminal station of the route planned in the original plan as attributes. For example, the end node 61 represents an end of the route of the train set A. In the example shown in FIG. 3B, the train 8 is the end of the route of the train set A in the original plan and in the example as shown in FIG. 3A, the train 8 arrives at the station A. Therefore, a value of an attribute of the terminal station of the end node 61 is the station A.

(4) Connection Link

The connection link means a directed link that links the train nodes, the train set node and the train node, and the train node and the end node, which will be generated as follows.

(How to Link Train Nodes)

The connection link between the train nodes is generated based on a starting station, start time, terminal station, and termination time of the train respectively represented by the train node so that the connection between time and station is established. For example, the train node 63 represents the train 1, and the starting station of it is the station C, a terminal station is the station A, start time is six o'clock, and termination time is six thirty. The node 64 represents the train 4, and the starting station of it is the station A, a terminal station is the station C, start time is six forty, and termination time is seven five. As the terminal station of the node 63 is the same as the starting station of the node 64 by comparison between the two train nodes, the connection is established. Since the termination time of the node 63 is earlier than the start time of the node 64, the connection of time is established. Therefore, the connection link from the node 63 to the node 64 may be established. Likewise, it is possible to generate the connection link towards the nodes representing the train 5, the train 3, and the train 10 from the node 63.

A weight that facilitates selection as solution is set to the connection link between the trains continuously allocated to the same train in the original resource management plan compared to any other connection link. For example, the route is created by searching a round route with the smallest weight of the link on the network shown in FIG. 6 in this embodiment, which will be described in detail later. Therefore, a small weight value is set to the connection link between the trains continuously allocated to the same train set in the original resource management plan. Hereby, a plan having as few changes from the original plan as possible can be acquired. The following description of the weight that facilitates selection as the connection link has the same meaning.

(How to Link Train Node and Train Set Node)

The connection link between the train node and the train set node is generated to establish the connection between time and site based on the starting station, start time, terminal station and termination time represented by the train node, and the start time and end time in the time zone when the train set is available, and the train set position at the start of the management, which are represented by the train set node. For example, the time zone which allows the use of the train set (train set A) represented by the train set node 62 is 6 o'clock, and the start location is the station C. Accordingly, the connection link is generated from the train set node 62 towards the train node representing the train that departs the station C at 6 o'clock or later as the start time. That is, the connection link towards the train nodes representing the trains 1, 2, 6 and 8 is generated.

As for the connection link that represents the same allocation as the original resource management plan, the weight that facilitates selection as solution is set compared with any other link.

(How to Link Train Node and End Node)

The connection link between the train node and the end node is generated from the train node that can be set as a final train of the route toward the end node. The train that can be set as the final train of the route basically means the train that finally arrives at a station adjacent to the car depot or the station yard which allows deposit of the train until the next day. In the meantime, the case that can't be set the train, it is not desirable since the train is redirected to store the vehicle in the car depot.

In the original plan, the weight that facilitates selection as solution compared with any other link is set to the connection link between the train node and the end node representing the train at the end of the route in the original plan.

(5) End Link

The end link is a link for restricting so that the train set terminates the route at a point scheduled in the original resource management plan. The end link is generated from one end node towards all train set nodes, and sets the weight based on the restriction of the route termination point. That is, a value of the terminal station in the original resource management plan held by the end node and a value of the terminal station in the resource management plan held by the train set node are compared. When those values are the same, the weight value is set to the end link for linking the corresponding end node and the corresponding train set node so as to facilitate selection compared with the end link from the corresponding end node to the other train set node.

For example, assuming that a link of the smaller weight facilitates selection, the end node 61 represents an end of the route of the train set A and the terminal station in the original plan is the station A. The node representing the train set A is the train set node 62 and a terminal station in the original plan is the station A. Since the terminal station of the end node 61 and the terminal station of the train set node 62 are the same, a smaller value than the link extended from the end node 61 to the other train set node is set to the end link for linking the end node 61 and the train set node 62. Further, the end node 65 represents an end of the route of the train set B. Since it is indicated by FIG. 3B that the train 9 is at the end of the route of the train set B, its terminal station is the station C. Since an end of the route of the train set C is also the station C, a weight of the same value is set to both the end link between the end node 65 and the train set node 67 representing the train set B and the end link between the end node 65 and the train set node 68 representing the train set C. Even if the train allocated at the end of the route is different from the one in the original resource management plan, the possibility that the trains having the same terminal station are allocated may be increased by setting the weight to the end links as described above.

In the embodiment, if the merge candidate exists, the network model is changed in accordance with the merge candidate based on the aforementioned network model. The resource management plan is then created based on the network model. The procedure for processing performed by the resource management plan creation device 1000 will be described in detail referring to FIG. 2.

In S201, the operation schedule read unit 1003 reads the operation information 2 stored in the storage unit 1100.

In S202, the network creation unit 1004 creates the network model shown in FIG. 6 based on the operation information read in S201. The procedure for creating the network model will be described in detail later referring to FIG. 10.

In S203, the merge candidate determination unit 1005 reads the mergeable site information 5 stored in the storage unit 1100 to determine the train as the merge candidate so as to be stored in the merge candidate information 6 of the storage unit 1100. The determination of the train as the merge candidate will be described in detail later referring to FIG. 11.

In S204, if it is determined by the merge candidate determination unit 1005 that the merge candidate exists, the process proceeds to incorporation of the merge candidate (S205). If it is determined that no merge candidate exists, the process proceeds to creation of the resource management plan (S206).

In S205, the merge candidate incorporating unit 1006 adds the node representing the merge candidate stored in the merge candidate information 6 of the storage unit 1100 and the link to the network model created in S202.

The method of incorporating the merge candidate to the network model will be described referring to FIG. 7. The explanation will be made on the assumption that operation of the trains 3 and 4 have been suspended by the operation schedule read in S201, and the merge candidate determination unit 1005 provides the determination results as shown in FIG. 4.

As operations of the trains 3 and 4 are suspended, the nodes representing the trains 3 and 4 and all the links connected to those nodes are deleted from the network shown in FIG. 6 in S202. In S205, a node 91 representing the train 5 (see FIG. 4) as the merge candidate is detected from the network, and the node is reproduced by the mergeable number. -The resultant nodes are added to the network model. At this time, reproduction of the node means that the same attribute value as that of the node as the connection source is added to the newly generated node. According to the example shown in FIG. 4, the train 5 is mergeable with the maximum of 2 train sets. Therefore, two nodes representing the train 5 are reproduced and added to the network model (nodes 92 and 93) as shown in FIG. 7.

After adding the nodes, the link for connecting the reproduced nodes and the other node is created. There are two methods of creating the link as follows.

(1) One Train as Merge Candidate

The link is generated to have connection to the same nodes as the ones to which the node as the reproduction source is connected. Referring to FIG. 7, for example, the node 91 is connected to the links including the train node "train 1", train node "train 2", the train set node "train set C" as connection sources, and the links including the train node "train 8", train node "train 7", train node "train 6", and end node "end C" as connection destinations. Similarly, The nodes 92 and 93 as reproductions of the node 91 are connected to the links including the train node "train 1", train node "train 2" and train set node "train set C" as connection sources, and the links including the train node "train 8", train node "train 7", train node "train 6" and end node "end C" as connection destinations.

(2) Multiple Trains as Merge Candidates

The link having the starting train of merge candidate as the connection destination is generated in the same manner as in the case of the node as the reproduction source. The link having the terminal train as merge candidate as the connection source is generated in the same manner as in the case of the node as the connection source. The link of the trains between the starting and terminal trains is generated so that the link for connecting the merge candidates only exists. For example, assuming that the merge candidate includes "train 5, train 8, train 10", the link having the reproduced node of the train 5 as the connection destination is generated in the same manner as in the case of generating the link having the train 5 as the connection destination. The link having the reproduction nodes of the train 10 as the connection source is generated in the same manner as in the case of generating the link having the train 10 as the connection source. The link having the reproduction node of the train 5 as the connection source is generated only towards the reproduction node of the train 8. The link having the reproduction node of the train 8 as the connection source is generated only towards the reproduction node of the train 10.

FIG. 8 shows an example of the solution of the resource management plan represented by the network model. Referring to FIG. 8, the management of the train set A is completed after the run as the train 1, as a part of the merge train 5, and as the train 8. Likewise, the management of the train set C is completed after the run as a part of the merge train 5, as the train 6 and as the train 10. In S206, the plan creation unit 1007 creates the resource management plan based on the network model obtained through execution of steps S201 to S205. The detailed procedure will be described later referring to FIG. 13.

In S207, the plan creation unit 1007 presents the user the plan created in S206. FIG. 9 shows an example of an output screen. An output screen 111 displays a chart 112 of the operation schedule and a chart 113 of the allocation. The screen is formed by the plan creation unit 1007 and displayed on the display unit 1200.

The operation schedule chart 112 and the allocation chart 113 may be used in the same manner as described referring to FIGS. 3A and 3B. Referring to the example of the network model shown in FIG. 8, the train sets A and C are merged with the original train 5, which then runs. The operation schedule chart 112 showing the management plan represented by the network model has train lines 115 and 116 indicating merging along with the train line 114 corresponding to the original train 5. Referring to the allocation chart 113, line segments 117, 118 and 119 indicating the train 5 are provided to the sections indicating the allocation of the train to the train sets A, B and C, respectively. Furthermore, a label identifying the number of vehicles of the corresponding train set is provided near the line segment indicating the train. For example, the label 120 represents that the train set A runs from the first vehicle to the second vehicle of the train 5 among six vehicles.

Generation of the network model in S202, determination of the merge candidate in S203, and creation of the resource management plan in S206 will be described in detail.

FIG. 10 shows the procedure of generating the network model in S202.

In S121, the network creation unit 1004 reads the route information 4 stored in the storage unit 1100.

In S122, the network creation unit 1004 reads the resource information 3 stored in the storage unit 1100.

In S123, the network creation unit 1004 generates the train node indicating each train by separating the route information read in S121 to the train, and allocates the attribute of the train extracted from the route information to the train set node of the train. The details of the train node and the attributes allocated to the train node are represented by the network model of FIG. 6. In S123, the identification information used as the name of the train on the route information is added as the one for the node of the subject train.

In S124, the network creation unit 1004 creates the train set node and the end node based on the resource information read in S122, and adds the identification information and attributes of the node to the respective nodes. The details of the nodes (attributes of the node) are the same as those represented by the network model shown in FIG. 6.

In S125, the network creation unit 1004 selects one node from those created in S123 and S124.

In S126, the network creation unit 1004 determines whether the node selected in S125 is the end node. If it is the end node, the process proceeds to S127 for generating the end link. If it is not the end node, the process proceeds to S129 for generating the connection link.

In S127 and S128, the network creation unit 1004 creates the end link as described below.

In S127, the end link is created from the node selected in S125 to the train set node with the same terminal station as the "terminal station in the original plan" as one of attributes of the selected node (end link 1). Furthermore, the end link is generated from the node selected in S125 towards the rest of the train set nodes (end link 2).

In S128, each weight to the end links 1 and 2 created in S127 is set. The weight value to the end link 1 is set with more ease in creation of the resource management plan than the end link 2.

In S129, the network creation unit 1004 generates the connection link from the node selected in S125 towards the node which enables the connection based on comparison between the starting station and the start time, and the terminal station and termination time. The detailed explanation is the same as the one described referring to the network model shown in FIG. 6.

In S1210, the network creation unit 1004 sets the weight to the connection link created in S129. If the two nodes connected through the link are sequentially allocated to the same train set in the original plan, the weight values are set so that they are selected with more ease than the other link connected to at least one of the two nodes in creation of the resource management plan.

In S1211, the network creation unit 1004 determines whether all the nodes created in S123 and S124 are processed in S127 to S128 or S129 to S1210. If all the nodes are processed, a series of processes are finished. If they are not processed, the process proceeds to S125.

The procedure for determining the merge candidate in S203 will be described referring to FIG. 11.

In S1301, the merge candidate determination unit 1005 reads the operation information 2, the resource information 3, and the route information 4 from the storage unit 1100, and calculates the number of train sets (deposit number) X at each station set as the management completion station. If the runnable track and the allocatable train vary depending on the vehicle type, the value is calculated for each vehicle type so that the subsequent process will be executed for each vehicle type individually.

In S1302, the merge candidate determination unit 1005 calculates the deposit number Y at each station in the original plan. Specifically, the original route information 1 is read from the storage unit 1100 so as to calculate the deposit number at each station.

If the allocated route is not continuous upon determination of the management completion station of each train set, that is, among trains allocated in series to the same train set, the terminal station of the train allocated earlier and the starting station of the train allocated later are different, or the train allocated later starts earlier than the termination time of the train allocated earlier, the train set including up to the train which keeps continuity may be validated. The management completion station is set as the last terminal station for the group of validated trains among those allocated to the train set.

In S1303, the merge candidate determination unit 1005 determines whether or not the deposit number X calculated in S1301 is different from the deposit number Y calculated in S1302. If it is determined that both values are different, the process executes S1304. If both values are equal, the process ends.

In S1304, the merge candidate determination unit 1005 generates the candidates in the resource merging section. For example, in the railroad application, combinations of the starting station and terminal station among the stations which allow the merge train to run. Generation of the candidates for the merging section may vary depending on whether the management completion station for each train set conforms to the original plan, or whether the deposit number of each management completion station conforms to the original plan. Assuming that the plan shown in FIG. 3 is designated as the original plan, the cases of suspending the train 3 (train line 61, horizontal bar 63) and the train 4 (train line 62, horizontal bar 64) will be described referring to FIG. 12.

(1) Conforming Management Completion Station of Each Train Set to the Original Plan

The management completion station (S1) of the operation information 2 read from the storage unit in S1301 for each train set is compared with the management completion station (S2) in the original plan so as to detect the different train set.

With respect to each of the detected train sets, the station S1 is designated as the starting station of the merging section, and the station S2 is designated as the terminal station of the merging section, and a combination of the starting station and terminal station of the merging section is made.

Additionally, although the management completion station is kept unchanged, if the suspension of the service is included in the route, the station where the suspension starts is designated as the starting station of the merging section, and the station where the suspension ends is designated as the terminal station of the merging section. The combination of the starting and terminal stations of the merging section is added.

An example of the service suspension will be described referring to FIGS. 12A and 12B. Operations of the trains 3 and 4 are suspended so that the management of the train set A is completed at the train 1, which is changed from the train 8. The station A is designated as the terminal station of the trains 8 and 1, and the management completion station is not changed. Meanwhile, as for the train set C, the train to run upon start of the management is suspended, and accordingly, it cannot be pulled out of the car depot. The management completion station is changed from the station C as the terminal station of the train 10 to the station A. The combination of the station A as the starting station and the station C as the terminal station of the merging section is made as one of candidates of the merging section. Additionally, the route of the train set A includes suspension of the operation although the management completion station is not changed. As a result, the combination of the station A that is the starting station of the suspended section designated as the starting station of the merging section, and the station C that is the terminal station of the suspended section designated as the terminal section of the merging section. The combination is added as one of the candidates of the merging section.

(2) Conforming Deposit Number to the Original Plan

The group of stations for setting the deposit number to 0 is generated using the station having the deposit number calculated in S1301 different from the one calculated in S1302. Among those stations of the group, the station having the deposit number larger than the original plan is set as the starting station of the merging section, and the station having the deposit number smaller than the original plan is designated as the terminal station of the merging section. Then combination of the starting station and the terminal station of the merging section is made. Additionally, among the train sets determined as having unchanged management completion station, if the route of the train set includes suspension of the operation, the suspended starting station is designated as the starting station of the merging section, and the suspended terminal station is designated as the terminal station of the merging section. The combination of the starting station and the terminal station of the merging section is added.

Referring to FIG. 12, as explained in the description (1), the management completion station of the train set C is changed from the station C to the station A. The deposit number of the station A is increased to be larger than that of the original plan by 1, and the deposit number of the station C is decreased to be smaller than that of the original plan by 1. Accordingly the combination of the station A as the starting station of the merging section and the station C as the terminal station of the merging section is made as one of candidates of the merging section. Additionally, the route of the train set A includes suspension of the operation although the management completion station is unchanged. The combination of the station A as the starting station of the suspended section designated as the starting station of the merging section, and the station C as the terminal station of the suspended section designated as the terminal station of the merging section is added as one of candidates of the merging section.

In S1305, the merge candidate determination unit 1005 selects one unprocessed combination from those of the starting station and terminal station of the merging section which are generated in S1304.

In S1306, the merge candidate determination unit 1005 reads the mergeable site information 5 stored in the storage unit 1100, and creates the route which designates the starting station selected in S1305 to allow merging as the starting point, and designates the terminal station selected in S1305 to allow separation as the arrival point. The determination whether the station allows merging may be made by obtaining a mergeable site 52 with the track under the processing as the search key of the target track 51 using the mergeable site information 5. The determination is made based on whether or not the obtained result includes the station in the process. Similarly, the determination whether the station allows separation may be made by obtaining a separable site 53 by taking the track under the processing as the search key of the target track 51. The determination is made based on whether the obtained result includes the station in the process.

If there are multiple routes which contain the same train, and one route contains the other, the route may be selected as described below in accordance with the condition needed to be considered upon insertion of the merge train.

(1) Suppressing the Number of Merge Trains as Small as Possible

The route which contains the smallest numbers of trains is selected, and such route is only generated.

(2) Managing the Merged Trains Kept Unchanged until near the Management Completion

The route which contains maximum numbers of trains is selected, and such route is only created.

If the allocatable train varies depending on the vehicle type, each route is generated to contain only the train of the same allocable type in the same route.

The generated route is stored in the merge candidate information 6 (FIG. 5) of the storage unit 1100. Specifically, the combination of the starting station and terminal station of the merging section selected in S1305 is stored in the merging section 61 of the merge candidate information 6. The train IDs or train names of all the trains contained in the generated route are stored in the merge candidate 62. A mergeable number 63 stores the number of times that the same combination overlaps among the group of combinations generated in S1304.

As indicated in S1304, the example shown in FIG. 12 shows two combinations each defining the "station A" as the starting station, and the "station C" as the terminal station of the merging section. The route of the run of the section between the station A and station C has three patterns based on the operation information shown in FIG. 12A, that is, route I: train 5, route II: train 5, train 6, train 10, route III: train 5, train 8, train 10, respectively. The both routes II and III include the route I which has the smallest number of trains. In this embodiment, the route including the "train 5" is generated. As described above, the merge candidate information 6 stores "station A to station C" for the merging section 61, "train 5" for the merge candidate 62, and "2" for the mergeable number 63.

The procedure of processing the resource management plan executed in S206 will be described referring to FIG. 13.

In S1401, the plan creation unit 1007 temporarily deletes the end link with the weight larger than the fixed value from the network model generated by a series of the processes S201 to S205 for the purpose of enhancing the capability of creating the plan so that the terminal station of the route for each train set becomes the same as that of the original plan.

In S1402, the plan creation unit 1007 searches the round route (specifically, the route which returns the start node without passing any node except the starting node twice or more) based on the network model as a result of the process in S1401. The round route to be generated herein has a closed circuit starting from the train set node to the train set node through the end node as shown by the network model.

In S1403, the plan creation unit 1007 generates the constraint condition for searching the solution in subsequent step S1404 onward based on the mergeable site information 5 and the merge candidate information 6 stored in the storage unit 1100.

In S1404, the combination of the round route for covering all the respective train nodes only once, and covering all the respective merge train nodes once at a maximum (called round route set) from the generated multiple round routes. The condition is set to cover the merge train nodes "only once at a maximum". Therefore, they do not have to be necessarily covered.

The solution of the following set partitioning problem is searched.

<Constant>

[Expression 1]

$$a_{ij} = \begin{cases} 1: \text{Node i is contained in the round route j} \\ 0: \text{Any others} \end{cases}$$

$$Tr_i = \begin{cases} 1: \text{Node i denotes the node representing the train other than the merge train} \\ 0: \text{Node i denotes the node representing the merge train} \end{cases}$$

$w_j$: Total sum of the weight of the link contained in the round route j
N: Total sum of the train sets
Ns: Number of nodes representing the train other than the merge train
Npk: Number of trains contained in the kth merge candidate

<Decision Variable>

[Expression 2]

$$x_j = \begin{cases} 1: \text{Round route j is contained in the solution} \\ 0: \text{Any others} \end{cases}$$

<Objective function>

[Expression 3]

$$\min \sum_{j \in R} w_j x_j$$

R: Set of candidate round routes

<Constraint condition>

[Expression 4]

$$\sum_{j\in R} a_{ij} x_j \leqq 1 \quad \cdots (1)$$

$$\sum_{i\in T} Tr_i \sum_{j\in R} a_{ij} x_j = Ns \quad \cdots (2)$$

T: Set of all node

$$\sum_{j\in R} x_j = N \quad \cdots (3)$$

$$0 \leqq \sum_{i\in P_k} x_j a_{ij} Tr_i - \sum_{i\in P_k} x_1 a_{ij} \overline{Tr_i} \leqq N_{P_k} \quad \cdots (4)$$

where j≠1
pk: Set of nodes representing the train contained in the kth merge candidate

An object function means to obtain the set of round routes for minimizing the sum total of the weight. The condition (1) represents that the respective nodes are only contained in one round route at most in the set of round routes as the solution, and the condition (2) represents that the number of time that the node other than the merge train appears is equal to the number of nodes other than the merge train. Combination of the conditions (1) and (2) allows the node other than the merge train is only contained in one round route only once in the set of the round routes as the solution. The node of the merge train is not contained in the round route, or may be contained therein only once.

The condition (3) represents that the number of existing round routes contained in the set of the round routes as the solution is equal to the number of the train sets. There may be the case that the round route which contains two or more train set nodes is generated in S1404. The condition (3) has to be established so as not to select such round route.

The condition (4) is the one (separate-merge condition) for carrying out the merging and separating works of the resource at the available location. The separate-merge condition is considered to generate the route of the merge candidate, having mergeable site as the starting point, and the separable site as the end point. The process is intended to limit unwanted separation and merging by sequentially allocating the merge train node to the same route. Therefore, depending on the route for allocating the original train node as the merging counterpart, unwanted separation and merging may occur. If the merge candidate has the pattern "train 5, train 6, train 10", the nodes which represent those trains 5, 6 and 10 are reproduced to generate the merge train node so as to generate the link which allows connection of the merge train nodes of 5, 6 and 10 in series. In the aforementioned state, there is no limitation among the train nodes 5, 6 and 10. For this, those merge train nodes 5, 6 and 10 are allocated to the same route (route I), that is, allocated to the same train set without causing separation and merging on the way. Meanwhile, the original train may take the route of such pattern as "train nodes 5, 7 and 9". Then on the route I, after the train 5 runs as the merge train, the merging counterpart is separated at the terminal station of the train 5 so as to run as the train 6. It is merged with another train set, and the train 6 runs as the merge train. In order to avoid the aforementioned case, the original train node as the merging counterpart is limited under the condition (4).

The merge train node has to be sequentially allocated to the same route. On the contrary, as for the train node as the merging counterpart, only when the merge train node is merged, all the nodes of the train contained in the merge candidate are allocated to the same route. For instance, in the aforementioned example, only when the pattern "merge train nodes 5, 6, 10" is contained in the round route of the solution, the pattern "train nodes 5, 6, 10" has to be contained in the round route of the solution. The description how the condition (4) is expressed will be explained hereinafter.

The left term of the subtraction under the condition (4) denotes the node representing the one other than the merge train among those representing the train contained in the kth merge candidate, and the number of nodes contained in the round route j. The right term of the subtraction under the condition (4) is the one representing the merge train among those representing the train contained in the kth merge candidate, and the number of nodes contained in the round route 1. The node representing the train contained in the merge candidate denotes the merge train node created by the merge candidate incorporating unit 1006 based on the merge candidate 62 of the merge candidate information 6, and the train node as the source. Considering more carefully with respect to the creation of the link connected to the merge train node without interrupting the connection to the train as the merge candidate (refer to the explanation with respect to S205), the right term of the subtraction takes the value of 0 or Npk. Among the nodes contained in the merge candidate, no link is generated between the merge train node and the train node as the source. Actually, the number of nodes contained in the round route is up to Npk at the maximum. Therefore, the left term takes the value equal to or larger than 0, and equal to or smaller than Npk. If the round route 1 does not contain the merge train, that is, the right term in the subtraction takes 0, the condition (4) is established irrespective of the value of the left term of the subtraction. If the round route 1 contains the merge train, that is, the right term of the subtraction is Npk, the condition (4) is established only when the left term value of the subtraction is Npk, that is, the round route j contains all the train nodes of merge candidates. The Npk denotes the number of the "trains" contained in the kth merge candidate. For example, as the merge candidate of the record 64 shown in FIG. 5 includes only the "train 5", the Npk has the value of "1". If the merge candidate pattern has the "trains 5, 6, 10", its value is 3.

Upon formulation of the set partitioning problem, there may be the case that the condition to allocate one train set only to one route is added. As the network model according to the invention represents the train set as the node, such condition is contained in the one as described above.

Each of the round routes contained in the resultant set of the round routes may be the route allocated to the train set represented by the train set node contained in the round route.

In S1405, the plan creation unit 1007 determines whether the solution is obtained by searching in S1404. If the solution is obtained, the process proceeds to S1406. If it is not obtained, the process proceeds to S1407 for carrying out the determination.

In S1406, the plan creation unit 1007 stores the solution obtained in S1404 in the storage unit 1100 as the candidate for the resource management plan. At this time, the plan creation unit 1007 creates the candidate resource management plan by allocating the respective round routes contained in the solution obtained in S1404 to the train set corresponding to the train set node contained in the round route. If the solution contains the merge train node, the plan creation unit 1007 extracts the train node as the counterpart of the merge train node, and the merge train node, makes a comparison between the extracted train and the merge train with respect to the arrival time at the station, and calculates the position at which the respective trains (extracted train and merge train) are merged (the numbers of vehicles from start to end position). At this time, if the running direction after merging is not changed from the one before merging, the vehicle position is set at the forward position in the order of earlier arrival time. If the running direction after merging is changed, the vehicle position is set at the forward vehicle position in the order of later arrival time.

In S1407, the plan creation unit 1007 determines whether the end link with the weight larger than the fixed value is contained in the solution obtained in S1404. If it is contained, the process proceeds to S1408. If it is not contained, the process ends. The fixed value of the weight is assumed to have the same value as the fixed value used in S1401. The process is intended to determine whether the solution contains the train set with the terminal station of the route different from that of the original plan.

In S1408, the plan creation unit 1007 returns the link deleted in S1401 to the network model, and the process proceeds to S1402.

## Second Embodiment

According to the first embodiment, the resource management plan which contains the merge train is created to conform the management completion site or the deposit number to the original plan. In the second embodiment, the deadheading train is set to create the resource management plan without changing the management completion site or the deposit number of the original plan. This embodiment describes the feature different from that of the first embodiment.

FIG. 16 is a detailed flow of S203 "determination of merge candidate" according to the first embodiment. The process steps from S1301 to S1305 are the same as those described in the first embodiment.

In S1506, the merge candidate determination unit 1005 produces the deadhead train that leaves the candidate starting site of the merging section selected in S1305, and arrives at the terminal site as the terminal station, and passes through all the intermediate stations, and stores the information in the merge candidate information 6 of the storage unit 1100. The process executed in S1307 is the same as the one described in the first embodiment.

In this embodiment, step S203 according to the first embodiment is replaced with the aforementioned flow. If the merge candidate is the deadhead train upon incorporating the merge candidate to the network model in S205, it is added to the network model as the deadhead train node, and the link with the other node is generated in consideration of the link connection between the starting station and terminal station of the train.

The following condition will be considered in place of the condition (2) described in the first embodiment upon the search in S1404.
[Expression 5]

$$\sum_{i \in T} Tr'_i \sum_{j \in R} a_{ij} x_j = Ns' \quad \cdots (2)$$

Ns': The number of nodes representing those other than the deadhead train and merge train

Third Embodiment

The first embodiment is configured to create the merge candidate based on the management completion site. Provided is an example of a third embodiment configured to accept designation of the starting site and terminal site of the merge section from the user, and create the merge candidate for realizing the accepted merge section. In the third embodiment, the features different from those of the first embodiment will be described.
FIG. 14 shows a detailed flow of S203 "determination of merge candidate" according to the first embodiment.
In S1701, the merge candidate determination unit 1005 accepts inputs of the starting site and the terminal site of the merging section via the input unit 1201 from the user. At this time, based on the operation schedule read in S201, and the route information and resource information read in S121 and S122, charts of the operation schedule and allocation of the train as shown in FIG. 15 are displayed. The configuration shown in FIG. 15 is the same as the one shown in FIG. 9. In addition to FIG. 9 according to the first embodiment, FIG. 15 displays the deposit numbers at the respective stations (65, 66 of FIG. 15A), and the management completion site for the respective train sets (67, 68, 69 of FIG. 15B).
In S1702, the merge candidate determination unit 1005 generates the route as the merge candidate based on the starting site and the terminal site of the merging section accepted in S1701. The process is the same as the one executed in S1306 of the first embodiment.
According to this embodiment, the process step S203 of the first embodiment is replaced with the aforementioned flow. Any other process steps are executed in the similar way to the first embodiment, enabling creation of the resource management plan.

Fourth Embodiment

The first embodiment is configured to create the resource management plan without considering the order of merging the multiple resources. A fourth embodiment shows an example of creating substantially practical resource management plan by considering the merging order derived from the arriving order of the train.
FIG. 17 is a detailed flow of S206 "creation of resource management plan" according to the first embodiment. Steps in S1401 to S1404 are the same as those described in the first embodiment.
In S1605, the plan creation unit 1007 executes the following processes with respect to the merge train contained in the solution obtained in S1404.

(1) Newly Added Merge Train

With respect to the merge train added in S205 "Incorporation of merge candidate" according to the first embodiment, respective arrival times of the train sets to be merged with each other are compared, and allocates the number corresponding to early or late timing at the train set position in accordance with the earlier arrival time. Whether the allocation is carried out from the number corresponding to the early or late timing may be preliminarily changed. The train set position provides the value identifying the number of vehicles among all the vehicles constituting the train.

(2) Merge Train Contained in the Original Plan

As for the merge train set in the original plan, a comparison is made between the train sets to be merged with each other with respect to the arrival time, and the number corresponding to early or late timing at the train set position in accordance with the order from the earlier arriving is temporarily allocated. The train set position temporarily allocated is compared with the train set position in the original plan. If those positions are different, it is determined whether the subject train can be replaced at the merge station based on a shunting information 7 stored in the storage unit 1100. If it cannot be interchanged, the temporarily allocated train set position is set as one of the subject train.
The process steps of S1406 to S1409 are the same as those described in the first embodiment.
According to the embodiment, the step S206 of the first embodiment is replaced with the aforementioned flow.

The rest of the process steps are executed in the similar way to the first embodiment so as to allow creation of the resource management plan.

Reference Signs List

1000: resource management plan creation device, 1001: memory, 1002: program, 1003: operation schedule read unit, 1004: network creation unit, 1005: merge candidate determination unit, 1006: merge candidate incorporating unit, 1007: plan creation unit, 1100: storage unit, 1200: display unit, 1201: input unit, 1202: processing unit, 1203: communication unit, 1204: data path

## Claims

1. A resource management plan creation device realized by a computer which includes a storage unit for storing information, an output unit for outputting the information, an input unit for inputting the information, and a processing unit for executing a program,
wherein the storage unit stores operation schedule information of a transport service, and
wherein the processing unit executes the program to provide:

    an operation schedule read unit for reading the operation schedule information of the transport service preliminarily stored in the storage unit;
    a network creation unit which

        creates a network model for transport routes by generating a node having at least a starting site, a start time, a terminal site and a termination time of each transport route as attributes, and generating each path for connecting nodes representing each transport route that allows a continuous operation using a same resource based on the attributes of the respective nodes with respect to a plurality of transport routes contained in the operation schedule based on the operation schedule information,
        generates a management starting node with at least information for identifying a management starting site of each resource and a vehicle as the attributes, and a management completion node with at least information for identifying each management completion site and each resource as the attributes,
        generates each path for connecting the node representing each transport route that allows allocation of the resource represented by the management starting node, and the management starting node based on the attributes of the management starting node and the other node,
        generates each path for connecting the nodes which have values of the attributes of the management completion site of the management completion node accorded with those of the terminal site of the other node, and
        generates each path for connecting the management starting node and the management completion node having the same resource identification information as the attribute, which are added to the generated network model,

    a merge candidate determination unit for extracting transport routes as a candidate to which the plurality of resources are allocated to achieve a condition that the management completion site of each resource is not changed from an original plan based on the operation schedule information,
    a merge candidate incorporating unit which adds paths for connecting each merge train node and the other nodes to the network model by generating each merge node through reproduction of the node representing the transport route which allows allocation of the plurality of resources based on the attributes of the merge node and other nodes which constitute the network model, and
    a plan creation unit which extracts a path combination constituting a plurality of paths capable of allocating one resource to the respective nodes other than the merge node that forms the network model, and allocating the resource to each of the plurality of paths that form the extracted combination so as to create and output the resource management plan that meets a condition that does not change the management completion site from the original plan.

2. The resource management plan creation device according to claim 1, wherein the merge candidate determination unit includes

a unit for calculating the number of resources having the management completed at each of the available management completion sites, and
a unit for extracting the transport route as a candidate for allocating the plurality of resources to meet the condition that does not change the calculated value from the original plan.

**3.** The resource management plan creation device according to claim 2, wherein the merge candidate determination unit adds deadhead routes to meet the condition that does not change the management completion site of the resources or the number of resources having the management completed at each of the available management completion sites from the original plan.

**4.** The resource management plan creation device according to claim 3, wherein the merge candidate determination unit creates the transport route as a candidate for allocating the plurality of resources based on a designation of each transport route accepted through the input unit for allowing allocation of the plurality of resources, the designation being accepted through the input unit.

**5.** The resource management plan creation device according to claim 4, wherein the plan creation unit calculates a merge position at which the resource is merged in accordance with an arriving order of the resource at the merge location, and sets the calculated merge position of the resource in consideration of the arriving order at a merge station.

**6.** The resource management plan creation device according to claim 5, wherein the storage unit stores original route information that relates to a planned route before starting the operation, operation information that defines the route by a minimum unit of the transport service, resource information that relates to a train used for the transport service, route information that defines the order of executing the minimum unit of the transport service by the one resource, mergeable site information that defines an available site for merging or separating the plurality of resources, and operation schedule information of the transport service that relates to the route determined as the merge candidate or the preliminarily determined merge candidate.

**7.** A resource management plan creation method realized by a computer which includes a storage unit for storing operation schedule information of a transport service, an output unit for outputting information, an input unit for inputting the information, and a processing unit for executing a program, through an operation of the processing unit to execute the program, comprising the steps of:

reading the operation schedule information stored in the storage unit;
based on the operation schedule with respect to each of a plurality of transport routes contained in the operation schedule, providing a network model for transport routes by generating a node with at least a starting site, a start time, a terminal site and a termination time of each transport route as attributes, and generating each path for connecting the nodes representing each transport route that allows continuous operation using the same resource based on the attributes of the respective nodes;
generating a management starting node with at least information for identifying a management starting site and a vehicle of each resource, and a management completion node with at least information for identifying each management completion site and each resource as the attributes, generating each path for connecting the nodes representing each transport route that allows allocation of the resource represented by the management starting node and the management starting node, generating each path for connecting the nodes which have values of the attributes of the management completion node at the management completion site accorded with those of the other node at a completion site, and generating each path for connecting the management starting node and the management completion node each having the same resource identification information as the attributes, which are added to the generated network model;
extracting the transport routes as a candidate for allocating the plurality of resources to achieve a condition that does not change the management completion site of each resource from the original plan based on the operation schedule information,
generating merge nodes by reproducing the node representing each transport route that allows allocation of the multiple resources, adding paths for connecting each merge train node and the other nodes based on the attributes of the merge node and the other nodes constituting the network model,
extracting a path combination that constitutes a plurality of paths that allow allocation of one resource to the nodes other than the merge node constituting the network model from the network model, and
creating and outputting the resource management plan to meet the condition that does not change the management completion site from the original plan by allocating the resource to each of the plurality of paths constituting the combination.

8. The resource management plan creation method according to claim 7, further comprising the steps of:

calculating the number of resources having the management completed for each of available management completion sites; and
extracting the transport routes as a candidate for allocating the plurality of resources to meet the condition that does not change the calculated value from the original plan instead of the condition that does not change the management completion sites of each resources from the original plan.

9. The resource management plan creation method according to claim 8, further comprising the step of adding deadhead routes to meet the condition that does not change the management completion site of each resource or the number of resources having the management completed for each of the available management completion sites.

10. The resource management plan creation method according to claim 9, further comprising the step of generating the transport route as a candidate for allocating the plurality of resources based on a designation of the transport route accepted through the input unit, which allows allocation of the plurality of resources.

11. The resource management plan creation method according to claim 10, further comprising the step of calculating a merge position of the resource upon merging of the resource in accordance with an arriving order of the resource at a merge site, and setting the calculated merge position of the resource in consideration of the arriving order at a merge station.

12. A program for a resource management plan creation executed by a computer including a storage unit for storing operation schedule information of a transport service, an output unit for outputting the information, an input unit for inputting the information, and a processing unit for executing a program, through execution of the program by the processing unit, comprising:

an operation schedule read unit for reading the operation schedule information of the transport service preliminarily stored in the storage unit;
a network creation unit which

creates a network model for transport routes by generating a node having at least a starting site, a start time, a terminal site and a termination time of each transport route as attributes, and generating each path for connecting nodes representing each transport route that allows a continuous operation using a same resource based on the attributes of the respective nodes with respect to a plurality of transport routes contained in the operation schedule based on the operation schedule information,
generates a management starting node with at least information for identifying a management starting site of each resource and a vehicle as the attributes, and a management completion node with at least information for identifying each management completion site and each resource as the attributes,
generates each path for connecting the nodes representing each transport route that allows allocation of the resource represented by the management starting node, and the management starting node based on the attributes of the management starting node and the other nodes,
generates each path for connecting the nodes which have values of the attributes of the management completion site of the management completion node accorded with those of the terminal site of the other node, and
generates each path for connecting the management starting node and the management completion node having the same resource identification information as the attribute, which are added to the generated network model,

a merge candidate determination unit for extracting transport routes as a candidate to which the plurality of resources are allocated to achieve a condition that the management completion site of each resource is not changed from an original plan based on the operation schedule information,
a merge candidate incorporating unit which adds paths for connecting each merge train node and the other nodes to the network model by generating each merge node through reproduction of the node representing the transport route which allows allocation of the plurality of resources based on the attributes of the merge node and other nodes which constitute the network model, and
a plan creation unit which extracts a path combination constituting a plurality of paths capable of allocating one resource to the respective nodes other than the merge node that forms the network model, and allocating the resource to each of the plurality of paths that form the extracted combination so as to create and output the resource management plan that meets a condition that does not change the management completion site from the original plan.

**Patentansprüche**

1. Vorrichtung zur Erzeugung eines Ressourcenverwaltungsplans, die in Form eines Computers ausgeführt ist, der eine Speichereinheit zum Speichern von Informationen, eine Ausgabeeinheit zum Ausgeben der Informationen, eine Eingabeeinheit zum Eingeben der Informationen, sowie eine Verarbeitungseinheit zum Ausführen eines Programms umfasst,
worin die Speichereinheit Betriebsablaufinformationen eines Transportdienstes speichert und
worin die Verarbeitungseinheit ein Programm ausführt, um Folgendes bereitzustellen:

eine Betriebsablauf-Ausleseeinheit zum Auslesen der Betriebsablaufinformationen des Transportdienstes, die in der Speichereinheit zwischengespeichert wurden;
eine Netzwerk-Erzeugungseinheit, die

ein Netzwerkmodell für Transportrouten erzeugt, indem sie einen Knoten generiert, der zumindest einen Startstandort, einen Startzeitpunkt, einen Endstandort und einen Endzeitpunkt für jede Transportroute als Attribute aufweist, und indem sie auf Basis der Attribute der jeweiligen Knoten in Bezug auf eine Vielzahl von Transportrouten, die in dem auf den Betriebsablaufinformationen basierenden Betriebsablauf enthalten sind, jeden Pfad zur Verbindung von Knoten generiert, der jede Transportroute repräsentiert, die einen durchgehenden Betrieb unter Verwendung einer selben Ressource erlaubt,
einen Verwaltungsstartknoten mit zumindest solchen Informationen, um einen Verwaltungsstartstandort für jede Ressource und ein Fahrzeug als die Attribute zu identifizieren, und einen Verwaltungsbeendigungsknoten mit zumindest solchen Informationen, um jeden Verwaltungsbeendigungsstandort und jede Ressource als die Attribute zu identifizieren, generiert,
jeden Pfad zur Verbindung des Knotens, der jede Transportroute repräsentiert, die eine Zuordnung der durch den Verwaltungsstartknoten repräsentierten Ressource erlaubt, und des Verwaltungsstartknotens auf Basis der Attribute des Verwaltungsstartknotens und des anderen Knotens generiert,
jeden Pfad generiert, um diejenigen Knoten zu verbinden, die Werte der Attribute des Verwaltungsbeendigungsstandorts des Verwaltungsbeendigungsknotens aufweisen, die mit denen des Beendigungsstandorts des anderen Knotens übereinstimmen, und
jeden Pfad generiert, um denjenigen Verwaltungsstartknoten und denjenigen Verwaltungsbeendigungsknoten zu verbinden, welche dieselben Ressourcenidentifikationsinformationen wie die Attribute aufweisen,

welche Pfade zu dem generierten Netzwerkmodell hinzugefügt werden;

eine Zusammenlegungskandidaten-Bestimmungseinheit, um Transportrouten als einen Kandidaten zu extrahieren, dem die Vielzahl von Ressourcen zugeordnet werden, um eine Bedingung zu erfüllen, dass der Verwaltungsbeendigungsstandort jeder Ressource nicht gegenüber einem ursprünglichen Plan, der auf den Betriebsablaufinformationen basiert, geändert wird,
eine Zusammenlegungskandidaten-Eingliederungseinheit, welche Pfade zum Netzwerkmodell hinzufügt, um jeden Zusammenlegungszugknoten und die anderen Knoten auf Basis der Attribute des Zusammenlegungsknotens und der anderen Knoten, aus denen das Netzwerkmodell besteht, zu verbinden, indem jeder Zusammenlegungsknoten dadurch generiert wird, dass der Knoten reproduziert wird, der die Transportroute repräsentiert, welche die Zuordnung der Vielzahl von Ressourcen erlaubt, und
eine Planerzeugungseinheit, welche eine die aus einer Vielzahl von Pfaden bestehende Pfadkombination extrahiert und dazu fähig ist, den jeweiligen Knoten, die das Netzwerkmodell bilden und die nicht der Zusammenlegungsknoten sind, eine Ressource zuzuordnen, und die Ressource zu jedem aus der Vielzahl von Pfaden zuzuordnen, welche die extrahierte Kombination bilden, um denjenigen Ressourcenverwaltungsplan zu erzeugen und auszugeben, der eine Bedingung erfüllt, dass der Verwaltungsbeendigungsstandort gegenüber dem ursprünglichen Plan nicht geändert wird.

2. Vorrichtung zur Erzeugung eines Ressourcenverwaltungsplans nach Anspruch 1, worin die Zusammenlegungskandidaten-Bestimmungseinheit Folgendes umfasst:

eine Einheit zur Berechnung der Anzahl von Ressourcen, deren Verwaltung an jedem der verfügbaren Verwaltungsbeendigungsstandorte abgeschlossen wird, und
eine Einheit zum Extrahieren der Transportroute als Kandidat, um die Vielzahl von Ressourcen zuzuordnen, um die Bedingung zu erfüllen, dass der berechnete Wert gegenüber dem ursprünglichen Plan nicht geändert wird.

3. Vorrichtung zur Erzeugung eines Ressourcenverwaltungsplans nach Anspruch 2, worin die Zusammenlegungskandidaten-Bestimmungseinheit Leerfahrtrouten hinzufügt, um die Bedingung zu erfüllen, den Verwaltungsbeendigungsstandort der Ressourcen oder die Anzahl von Ressourcen, bei denen die Verwaltung an jedem der verfügbaren Verwaltungsbeendigungsstandorte abgeschlossen wird, gegenüber dem ursprünglichen Plan nicht zu ändern.

4. Vorrichtung zur Erzeugung eines Ressourcenverwaltungsplans nach Anspruch 3, worin die Zusammenlegungskandidaten-Bestimmungseinheit die Transportroute als Kandidaten zur Zuordnung der Vielzahl von Ressourcen auf Basis einer durch die Eingabeeinheit angenommenen Zuweisung für jede Transportroute erzeugt, um die Zuordnung der Vielzahl von Ressourcen zu ermöglichen, wobei die Zuweisung durch die Eingabeeinheit angenommen wurde.

5. Vorrichtung zur Erzeugung eines Ressourcenverwaltungsplans nach Anspruch 4, worin die Planerzeugungseinheit eine Zusammenlegungsposition berechnet, an welcher die Ressource gemäß einer am Zusammenlegungsort ankommenden Bestellung der Ressource hinzugefügt wird, und die berechnete Zusammenlegungsposition der Ressource unter Berücksichtigung der an einer Zusammenlegungsstation ankommenden Bestellung festlegt.

6. Vorrichtung zur Erzeugung eines Ressourcenverwaltungsplans nach Anspruch 5, worin die Speichereinheit ursprüngliche Routeninformationen, die eine vor dem Start des Betriebsvorgangs geplante Route betreffen, Betriebsinformationen, welche die Route durch eine minimale Einheit des Transportdienstes definieren, Ressourceninformationen, die einen für den Transportdienst verwendeten Zug betreffen, Routeninformationen, welche die Reihenfolge der Durchführung der minimalen Einheit des Transportdienstes für die eine Ressource definieren, Zusammenlegungsstandortinformationen, die einen verfügbaren Standort zum Zusammenlegen oder Trennen der Vielzahl von Ressourcen definieren, sowie Betriebsablaufinformationen des Transportdienstes, welche die Route betreffen, die als der Zusammenlegungskandidat oder der vorläufig bestimmte Zusammenlegungskandidat bestimmt wurde, speichert.

7. Verfahren zur Erzeugung eines Ressourcenverwaltungsplans, das von einem Computer, der eine Speichereinheit zum Speichern von Betriebsablaufinformationen eines Transportdienstes, eine Ausgabeeinheit zum Ausgeben von Informationen, eine Eingabeeinheit zum Eingeben der Informationen, sowie eine Verarbeitungseinheit zum Ausführen eines Programms umfasst, durch einen Betriebsvorgang der Verarbeitungseinheit zur Ausführung des Programms ausgeführt wird, und das die folgenden Schritte umfasst:

Auslesen der in der Speichereinheit gespeicherten Betriebsablaufinformationen;
auf Basis des Betriebsablaufs in Bezug auf jede einer Vielzahl von Transportrouten, die im Betriebsablauf enthalten sind, Bereitstellen eines Netzwerkmodells für Transportrouten, indem ein Knoten mit zumindest einem Startstandort, einem Startzeitpunkt, einem Endstandort und einem Endzeitpunkt für jede Transportroute als Attribute generiert wird, und indem auf Basis der Attribute der jeweiligen Knoten jeder Pfad zur Verbindung der Knoten generiert wird, der jede Transportroute repräsentiert, die einen durchgehenden Betrieb unter Verwendung einer selben Ressource erlaubt;
Generieren eines Verwaltungsstartknotens mit zumindest solchen Informationen, um einen Verwaltungsstartstandort und ein Fahrzeug für jede Ressource zu identifizieren, sowie eines Verwaltungsbeendigungsknotens, um jeden Verwaltungsbeendigungsstandort und jede Ressource als Attribute zu identifizieren, Generieren jedes Pfades, der jede Transportroute repräsentiert, die eine Zuordnung der durch den Verwaltungsstartknoten repräsentierten Ressource erlaubt, zur Verbindung der Knoten und des Verwaltungsstartknotens, Generieren jedes Pfades zum Verbinden derjenigen Knoten, deren Werte der Attribute des Verwaltungsbeendigungsknotens am Verwaltungsbeendigungsstandort mit denen des anderen Knotens an einem Beendigungsstandort übereinstimmen, und Generieren jedes Pfades zum Verbinden desjenigen Verwaltungsstartknotens und desjenigen Verwaltungsbeendigungsknotens, die jeweils dieselbe Ressourcenidentifikationsinformationen wie die Attribute aufweisen, welche Pfade zu dem generierten Netzwerk hinzugefügt werden;
Extrahieren der Transportrouten als Kandidat, um die Vielzahl von Ressourcen zuzuordnen, um eine Bedingung zu erfüllen, dass der Verwaltungsbeendigungsstandort jeder Ressource gegenüber dem ursprünglichen Plan, der auf den Betriebsablaufinformationen basiert, nicht geändert wird;

Generieren von Zusammenlegungsknoten, die jede Transportroute repräsentieren, welche die Zuordnung der mehreren Ressourcen erlaubt, durch Reproduzieren des Knotens, Hinzufügen von Pfaden, um jeden Zusammenlegungsknoten und die anderen Knoten auf Basis der Attribute des Zusammenlegungsknotens und der anderen Knoten, aus welchen das Netzwerkmodell besteht, zu verbinden,
Extrahieren einer Pfadkombination aus dem Netzwerkmodell, die aus einer Vielzahl von Pfaden besteht, die eine Zuordnung einer Ressource zu den Knoten erlauben, aus denen das Netzwerkmodell besteht und die nicht der Zusammenlegungsknoten sind, und
Erzeugen und Ausgeben des Ressourcenverwaltungsplans, um die Bedingung zu erfüllen, dass der Verwaltungsbeendigungsstandort gegenüber dem ursprünglichen Plan nicht geändert wird, indem die Ressource zu jedem aus der Vielzahl von Pfaden zugeordnet wird, aus welchen die Kombination besteht.

**8.** Verfahren zur Erzeugung eines Ressourcenverwaltungsplans nach Anspruch 7, welches ferner die folgenden Schritte umfasst:

Berechnen der Anzahl von Ressourcen, deren Verwaltung für jeden der verfügbaren Verwaltungsbeendigungsstandorte beendet wird; und
Extrahieren der Transportrouten als einen Kandidaten, um die Vielzahl von Ressourcen zuzuordnen, um anstelle der Bedingung, dass die Verwaltungsbeendigungsstandorte jeder Ressource gegenüber dem ursprünglichen Plan nicht geändert werden, die Bedingung zu erfüllen, dass der berechnete Wert nicht gegenüber dem ursprünglichen Plan geändert wird.

**9.** Verfahren zur Erzeugung eines Ressourcenverwaltungsplans nach Anspruch 8, welches ferner den Schritt des Hinzufügens von Leerfahrtrouten umfasst, um die Bedingung zu erfüllen, dass der Verwaltungsbeendigungsstandort jeder Ressource oder der Anzahl von Ressourcen, bei der/denen die Verwaltung an jedem der verfügbaren Verwaltungsbeendigungsstandorte abgeschlossen wird, gegenüber dem ursprünglichen Plan nicht zu ändern.

**10.** Verfahren zur Erzeugung eines Ressourcenverwaltungsplans nach Anspruch 9, welches ferner den Schritt des Generierens der Transportroute als Kandidaten für die Zuordnung der Vielzahl von Ressourcen auf Basis einer durch die Eingabeeinheit angenommenen Zuweisung für die Transportroute umfasst, was die Zuordnung der Vielzahl von Ressourcen erlaubt.

**11.** Verfahren zur Erzeugung eines Ressourcenverwaltungsplans nach Anspruch 10, welches ferner den Schritt umfasst, eine Zusammenlegungsposition der Ressource zu berechnen, sobald die Ressource gemäß einer an einem Zusammenlegungsort ankommenden Bestellung hinzugefügt wurde, und die berechnete Zusammenlegungsposition der Ressource unter Berücksichtigung der an einer Zusammenlegungsstation ankommenden Bestellung festzulegen.

**12.** Programm zur Erzeugung eines Ressourcenverwaltungsplans, das von einem Computer, der eine Speichereinheit zum Speichern von Betriebsablaufinformationen eines Transportdienstes, eine Ausgabeeinheit zum Ausgeben der Informationen, eine Eingabeeinheit zum Eingeben der Informationen, sowie eine Verarbeitungseinheit zum Ausführen eines Programms umfasst, durch Ausführen des Programms durch die Verarbeitungseinheit ausgeführt wird und Folgendes umfasst:

eine Betriebsablauf-Ausleseeinheit zum Auslesen der Betriebsablaufinformationen des Transportdienstes, die in der Speichereinheit zwischengespeichert wurden;
eine Netzwerk-Erzeugungseinheit, die

ein Netzwerkmodell für Transportrouten erzeugt, indem sie einen Knoten generiert, der zumindest einen Startstandort, einen Startzeitpunkt, einen Endstandort und einen Endzeitpunkt für jede Transportroute als Attribute aufweist, und indem sie auf Basis der Attribute der jeweiligen Knoten in Bezug auf eine Vielzahl von Transportrouten, die in dem auf den Betriebsablaufinformationen basierenden Betriebsablauf enthaltenen sind, jeden Pfad zur Verbindung von Knoten generiert, der jede Transportroute repräsentiert, die einen durchgehenden Betrieb unter Verwendung einer selben Ressource erlaubt,
einen Verwaltungsstartknoten mit zumindest solchen Informationen, um einen Verwaltungsstartstandort für jede Ressource und ein Fahrzeug als die Attribute zu identifizieren, und einen Verwaltungsbeendigungsknoten mit zumindest solchen Informationen, um jeden Verwaltungsbeendigungsstandort und jede Ressource als die Attribute zu identifizieren, generiert,
jeden Pfad zur Verbindung der Knoten und des Verwaltungsstartknotens generiert, der jede Transportroute repräsentiert, die eine Zuordnung der durch den Verwaltungsstartknoten repräsentierten Ressource erlaubt, auf Basis der Attribute des Verwaltungsstartknotens und der anderen Knoten,

jeden Pfad generiert, um diejenigen Knoten zu verbinden, die Werte der Attribute des Verwaltungsbeendigungsstandorts des Verwaltungsbeendigungsknotens aufweisen, die mit denen des Beendigungsstandorts des anderen Knotens übereinstimmen, und

jeden Pfad generiert, um denjenigen Verwaltungsstartknoten und denjenigen Verwaltungsbeendigungsknoten zu verbinden, welche dieselben Ressourcenidentifikationsinformationen wie die Attribute aufweisen,

welche Pfade zu dem generierten Netzwerkmodell hinzugefügt werden;
eine Zusammenlegungskandidaten-Bestimmungseinheit, um Transportrouten als einen Kandidaten zu extrahieren, dem die Vielzahl von Ressourcen zugeordnet werden, um eine Bedingung zu erfüllen, dass der Verwaltungsbeendigungsstandort jeder Ressource nicht gegenüber einem ursprünglichen Plan, der auf den Betriebsablaufinformationen basiert, geändert wird,
eine Zusammenlegungskandidaten-Eingliederungseinheit, welche Pfade zum Netzwerkmodell hinzufügt, um jeden Zusammenlegungszugknoten und die anderen Knoten auf Basis der Attribute des Zusammenlegungsknotens und der anderen Knoten, aus denen das Netzwerkmodell besteht, zu verbinden, indem jeder Zusammenlegungsknoten dadurch generiert wird, dass der Knoten reproduziert wird, der die Transportroute repräsentiert, welche die Zuordnung der Vielzahl von Ressourcen erlaubt, und
eine Planerzeugungseinheit, welche eine die aus einer Vielzahl von Pfaden bestehende Pfadkombination extrahiert und dazu fähig ist, den jeweiligen Knoten, die das Netzwerkmodell bilden und die nicht der Zusammenlegungsknoten sind, eine Ressource zuzuordnen, und die Ressource zu jedem aus der Vielzahl von Pfaden zuzuordnen, welche die extrahierte Kombination bilden, um denjenigen Ressourcenverwaltungsplan zu erzeugen und auszugeben, der eine Bedingung erfüllt, dass der Verwaltungsbeendigungsstandort gegenüber dem ursprünglichen Plan nicht geändert wird.

## Revendications

**1.** Dispositif de création de plan de gestion de ressources réalisé par un ordinateur qui inclut une unité de stockage destinée à stocker des informations, une unité de sortie destinée à délivrer en sortie les informations, une unité d'entrée destinée à appliquer en entrée les informations, et une unité de traitement destinée à exécuter un programme ;
dans lequel l'unité de stockage stocke des informations d'horaires de fonctionnement d'un service de transport ; et dans lequel l'unité de traitement exécute le programme en vue de fournir :

une unité de lecture d'horaires de fonctionnement destinée à lire les informations d'horaires de fonctionnement du service de transport, stockées à titre préliminaire dans l'unité de stockage ;
une unité de création de réseau qui

crée un modèle de réseau pour des itinéraires de transport en générant un noeud présentant au moins un site de début, une heure de début, un site terminal et une heure de fin de chaque itinéraire de transport, sous la forme d'attributs, et en générant chaque trajet pour connecter des noeuds représentant chaque itinéraire de transport qui permet un fonctionnement continu au moyen d'une même ressource sur la base des attributs des noeuds respectifs relativement à une pluralité d'itinéraires de transport contenue dans l'horaire de fonctionnement basé sur les informations d'horaires de fonctionnement ;
génère un noeud de début de gestion avec au moins des informations pour identifier un site de début de gestion de chaque ressource et un véhicule en tant que les attributs, et un noeud d'achèvement de gestion avec au moins des informations pour identifier chaque site d'achèvement de gestion et chaque ressource en tant que les attributs ;
génère chaque trajet pour connecter le noeud représentant chaque itinéraire de transport qui permet une affectation de la ressource représentée par le noeud de début de gestion, et le noeud de début de gestion sur la base des attributs du noeud de début de gestion et de l'autre noeud ;
génère chaque trajet pour connecter les noeuds qui présentent des valeurs des attributs du site d'achèvement de gestion du noeud d'achèvement de gestion concordant avec celles du site terminal de l'autre noeud ; et
génère chaque trajet pour connecter le noeud de début de gestion et le noeud d'achèvement de gestion présentant les mêmes informations d'identification de ressources que l'attribut, lesquelles sont ajoutées au modèle de réseau généré ;

une unité de détermination de candidats de fusion destinée à extraire des itinéraires de transport en tant qu'un candidat auquel la pluralité de ressources est affectée en vue d'atteindre une condition selon laquelle le site d'achèvement de gestion de chaque ressource n'est pas modifié par rapport à un plan d'origine sur la base des informations d'horaires de fonctionnement ;
une unité d'incorporation de candidats de fusion qui ajoute des trajets pour connecter chaque noeud de fusion de train et les autres noeuds au modèle de réseau en générant chaque noeud de fusion à travers une reproduction du noeud représentant l'itinéraire de transport qui permet l'affectation de la pluralité de ressources sur la base des attributs du noeud de fusion et d'autres noeuds qui constituent le modèle de réseau ; et
une unité de création de plan qui extrait une combinaison de trajets constituant une pluralité de trajets en mesure d'affecter une ressource aux noeuds respectifs distincts du noeud de fusion qui forme le modèle de réseau, et d'affecter une ressource à chaque trajet de la pluralité de trajets qui forme la combinaison extraite, afin de créer et de délivrer en sortie le plan de gestion de ressources qui satisfait une condition qui ne modifie pas le site d'achèvement de gestion par rapport au plan d'origine.

**2.** Dispositif de création de plan de gestion de ressources selon la revendication 1, dans lequel l'unité de détermination de candidats de fusion inclut :

une unité pour calculer le nombre de ressources dont la gestion est achevée au niveau de chacun des sites d'achèvement de gestion disponibles ; et
une unité pour extraire l'itinéraire de transport en tant qu'un candidat pour affecter la pluralité de ressources pour satisfaire la condition qui ne modifie pas la valeur calculée par rapport au plan d'origine.

**3.** Dispositif de création de plan de gestion de ressources selon la revendication 2, dans lequel l'unité de détermination de candidats de fusion ajoute des itinéraires de voyage à vide pour satisfaire la condition qui ne modifie pas le site d'achèvement de gestion des ressources ou le nombre de ressources dont la gestion est achevée au niveau de chacun des sites d'achèvement de gestion disponibles par rapport au plan d'origine.

**4.** Dispositif de création de plan de gestion de ressources selon la revendication 3, dans lequel l'unité de détermination de candidats de fusion crée l'itinéraire de transport en tant qu'un candidat pour affecter la pluralité de ressources sur la base d'une désignation de chaque itinéraire de transport acceptée par le biais de l'unité d'entrée pour permettre une affectation de la pluralité de ressources, la désignation étant acceptée par l'intermédiaire de l'unité d'entrée.

**5.** Dispositif de création de plan de gestion de ressources selon la revendication 4, dans lequel l'unité de création de plan calcule une position de fusion à laquelle la ressource est fusionnée selon un ordre d'arrivée de la ressource à l'emplacement de fusion, et définit la position de fusion calculée de la ressource en tenant compte de l'ordre d'arrivée au niveau d'une station de fusion.

**6.** Dispositif de création de plan de gestion de ressources selon la revendication 5, dans lequel l'unité de stockage stocke des informations d'itinéraire d'origine qui se rapportent à un itinéraire planifié avant de commencer le fonctionnement, des informations de fonctionnement qui définissent l'itinéraire par une unité minimale du service de transport, des informations de ressources qui se rapportent à un train utilisé pour le service de transport, des informations d'itinéraires qui définissent l'ordre d'exécution de l'unité minimale du service de transport par ladite une ressource, des informations de sites fusionnables qui définissent un site disponible pour fusionner ou séparer la pluralité de ressources, et des informations d'horaires de fonctionnement du service de transport qui se rapportent à l'itinéraire déterminé en tant que le candidat de fusion ou le candidat de fusion déterminé à titre préliminaire.

**7.** Procédé de création de plan de gestion de ressources réalisé par un ordinateur qui inclut une unité de stockage destinée à stocker des informations d'horaires de fonctionnement d'un service de transport, une unité de sortie destinée à délivrer en sortie des informations, une unité d'entrée destinée à appliquer en entrée les informations, et une unité de traitement destinée à exécuter un programme, à travers un fonctionnement de l'unité de traitement pour exécuter le programme, comportant les étapes ci-dessous consistant à :

lire les informations d'horaires de fonctionnement stockées dans l'unité de stockage ;
sur la base de l'horaire de fonctionnement relativement à chaque itinéraire d'une pluralité d'itinéraires de transport contenue dans l'horaire de fonctionnement, fournir un modèle de réseau pour des itinéraires de transport en générant un noeud présentant au moins un site de début, une heure de début, un site terminal et une heure de fin de chaque itinéraire de transport, sous la forme d'attributs, et en générant chaque trajet pour connecter des noeuds représentant chaque itinéraire de transport qui permet un fonctionnement continu au moyen de la même ressource sur la base des attributs des noeuds respectifs ;
générer un noeud de début de gestion avec au moins des informations pour identifier un site de début de gestion et un véhicule de chaque ressource, et un noeud d'achèvement de gestion avec au moins des informations pour identifier chaque site d'achèvement de gestion et chaque ressource en tant que les attributs, générer chaque trajet pour connecter les noeuds représentant chaque itinéraire de transport qui permet une affectation de la ressource représentée par le noeud de début de gestion, et le noeud de début de gestion, générer chaque trajet pour connecter les noeuds qui présentent des valeurs des attributs du noeud d'achèvement de gestion au niveau du site d'achèvement de gestion concordant avec celles de l'autre noeud au niveau d'un site d'achèvement, et générer chaque trajet pour connecter le noeud de début de gestion et le noeud d'achèvement de gestion présentant les mêmes informations d'identification de ressources que les attributs, lesquelles sont ajoutées au modèle de réseau généré ;
extraire les itinéraires de transport en tant qu'un candidat pour affecter la pluralité de ressources en vue d'atteindre une condition qui ne modifie pas le site d'achèvement de gestion de chaque ressource par rapport au plan d'origine sur la base des informations d'horaires de fonctionnement ;
générer des noeud de fusions en reproduisant le noeud représentant chaque itinéraire de transport qui permet l'affectation des multiples ressources, et ajouter des trajets pour connecter chaque noeud de fusion de train et les autres noeuds sur la base des attributs du noeud de fusion et des autres noeuds constituant le modèle de réseau ;
extraire une combinaison de trajets qui constitue une pluralité de trajets permettant l'affectation d'une ressource aux noeuds distincts du noeud de fusion constituant le modèle de réseau, à partir du modèle de réseau ; et
créer et délivrer en sortie le plan de gestion de ressources qui satisfait la condition qui ne modifie pas le site d'achèvement de gestion par rapport au plan d'origine, en affectant la ressource à chaque trajet de la pluralité de trajets constituant la combinaison.

**8.** Procédé de création de plan de gestion de ressources selon la revendication 7, comprenant en outre les étapes ci-dessous consistant à :

calculer le nombre de ressources dont la gestion est achevée pour chacun des sites d'achèvement de gestion disponibles ; et
extraire les itinéraires de transport en tant qu'un candidat pour affecter la pluralité de ressources en vue de satisfaire la condition qui ne modifie pas la valeur calculée par rapport au plan d'origine, au lieu de la condition qui ne modifie pas les sites d'achèvement de gestion de chacune des ressources par rapport au plan d'origine.

**9.** Procédé de création de plan de gestion de ressources selon la revendication 8, comprenant en outre l'étape consistant à ajouter des itinéraires de voyage à vide pour satisfaire la condition qui ne modifie pas le site d'achèvement de gestion de chaque ressource ou le nombre de ressources dont la gestion est achevée pour chacun des sites d'achèvement de gestion disponibles.

**10.** Procédé de création de plan de gestion de ressources selon la revendication 9, comprenant en outre l'étape consistant à générer l'itinéraire de transport en tant qu'un candidat pour affecter la pluralité de ressources sur la base d'une désignation de l'itinéraire de transport acceptée par le biais de l'unité d'entrée, qui permet l'affectation de la pluralité de ressources.

**11.** Procédé de création de plan de gestion de ressources selon la revendication 10, comprenant en outre l'étape consistant à calculer une position de fusion de la ressource suite à une fusion de la ressource selon un ordre d'arrivée de la ressource au niveau d'un site de fusion, et à définir la position de fusion calculée de la ressource en tenant compte de l'ordre d'arrivée au niveau d'une station de fusion.

**12.** Programme pour une création de plan de gestion de ressources exécuté par un ordinateur incluant une unité de stockage destinée à stocker des informations d'horaires de fonctionnement d'un service de transport, une unité de sortie destinée à délivrer en sortie les informations, une unité d'entrée destinée à appliquer en entrée les informations, et une unité de traitement destinée à exécuter un programme, à travers l'exécution du programme par l'unité de traitement, comportant :

une unité de lecture d'horaires de fonctionnement destinée à lire les informations d'horaires de fonctionnement du service de transport, stockées à titre préliminaire dans l'unité de stockage ;
une unité de création de réseau qui

crée un modèle de réseau pour des itinéraires de transport en générant un noeud présentant au moins un site de début, une heure de début, un site terminal et une heure de fin de chaque itinéraire de transport, sous la forme d'attributs, et en générant chaque trajet pour connecter des noeuds représentant chaque itinéraire de transport qui permet un fonctionnement continu au moyen d'une même ressource sur la base des attributs des noeuds respectifs relativement à une pluralité d'itinéraires de transport contenue dans l'horaire de fonctionnement basé sur les informations d'horaires de fonctionnement ;
génère un noeud de début de gestion avec au moins des informations pour identifier un site de début de gestion de chaque ressource et un véhicule en tant que les attributs, et un noeud d'achèvement de gestion avec au moins des informations pour identifier chaque site d'achèvement de gestion et chaque ressource en tant que les attributs ;
génère chaque trajet pour connecter les noeuds représentant chaque itinéraire de transport qui permet une affectation de la ressource représentée par le noeud de début de gestion, et le noeud de début de gestion sur la base des attributs du noeud de début de gestion et des autres noeuds ;
génère chaque trajet pour connecter les noeuds qui présentent des valeurs des attributs du site d'achèvement de gestion du noeud d'achèvement de gestion concordant avec celles du site terminal de l'autre noeud ; et
génère chaque trajet pour connecter le noeud de début de gestion et le noeud d'achèvement de gestion présentant les mêmes informations d'identification de ressources que l'attribut, lesquelles sont ajoutées au modèle de réseau généré ;

une unité de détermination de candidats de fusion destinée à extraire des itinéraires de transport en tant qu'un candidat auquel la pluralité de ressources est affectée en vue d'atteindre une condition selon laquelle le site d'achèvement de gestion de chaque ressource n'est pas modifié par rapport à un plan d'origine sur la base des informations d'horaires de fonctionnement ;
une unité d'incorporation de candidats de fusion qui ajoute des trajets pour connecter chaque noeud de fusion de train et les autres noeuds au modèle de réseau en générant chaque noeud de fusion à travers une reproduction du noeud représentant l'itinéraire de transport qui permet l'affectation de la pluralité de ressources sur la base des attributs du noeud de fusion et d'autres noeuds qui constituent le modèle de réseau ; et
une unité de création de plan qui extrait une combinaison de trajets constituant une pluralité de trajets en mesure d'affecter une ressource aux noeuds respectifs distincts du noeud de fusion qui forme le modèle de réseau, et d'affecter la ressource à chaque trajet de la pluralité de trajets qui forme la combinaison extraite, afin de créer et de délivrer en sortie le plan de gestion de ressources qui satisfait une condition qui ne modifie pas le site d'achèvement de gestion par rapport au plan d'origine.

FIG. 1

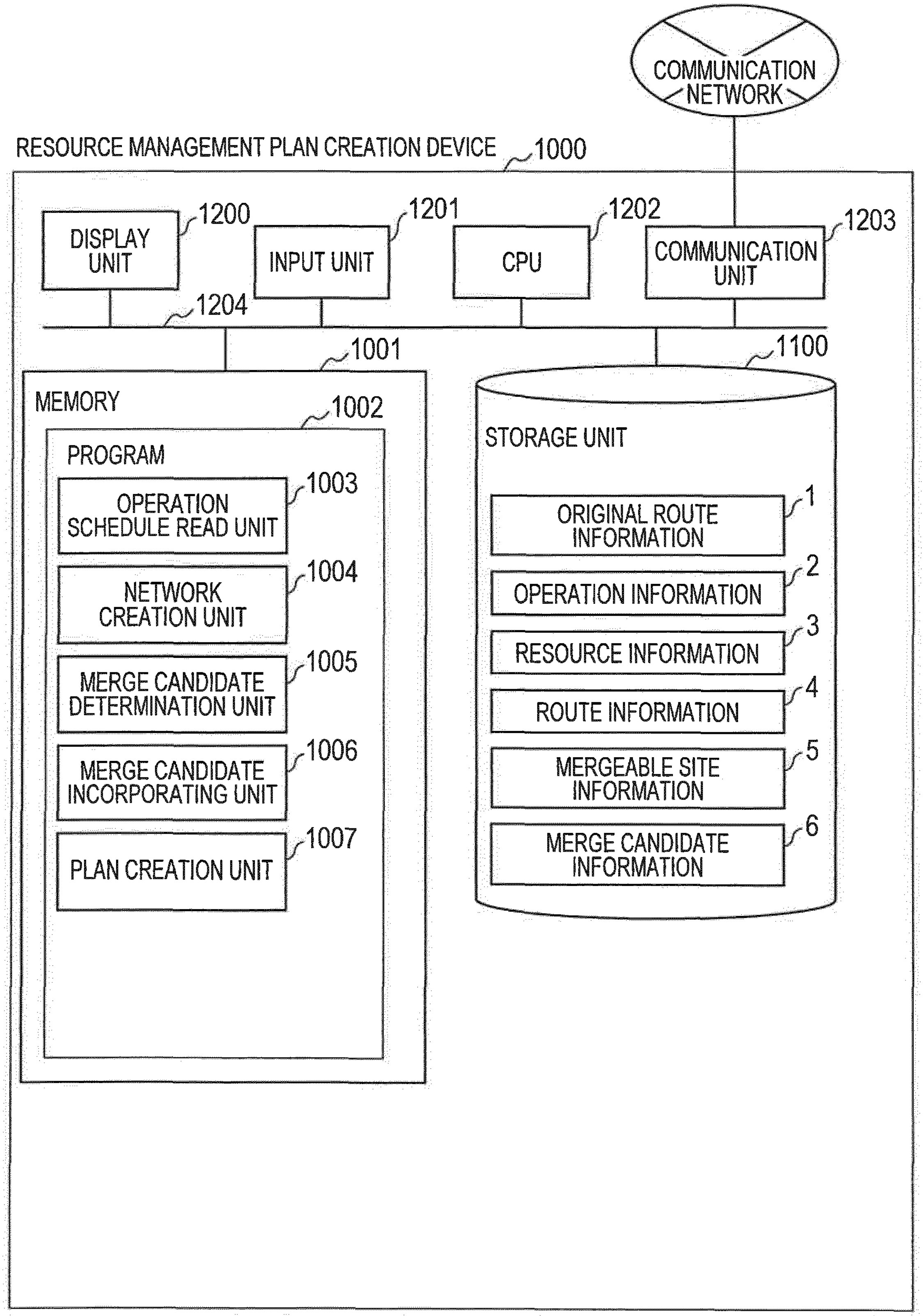
COMMUNICATION NETWORK
RESOURCE MANAGEMENT PLAN CREATION DEVICE
1000
DISPLAY UNIT
1200
INPUT UNIT
1201
CPU
1202
COMMUNICATION UNIT
1203
1204
1001
1100
MEMORY
1002
PROGRAM
OPERATION SCHEDULE READ UNIT
1003
NETWORK CREATION UNIT
1004
MERGE CANDIDATE DETERMINATION UNIT
1005
MERGE CANDIDATE INCORPORATING UNIT
1006
PLAN CREATION UNIT
1007
STORAGE UNIT
ORIGINAL ROUTE INFORMATION
1
OPERATION INFORMATION
2
RESOURCE INFORMATION
3
ROUTE INFORMATION
4
MERGEABLE SITE INFORMATION
5
MERGE CANDIDATE INFORMATION
6

FIG. 2

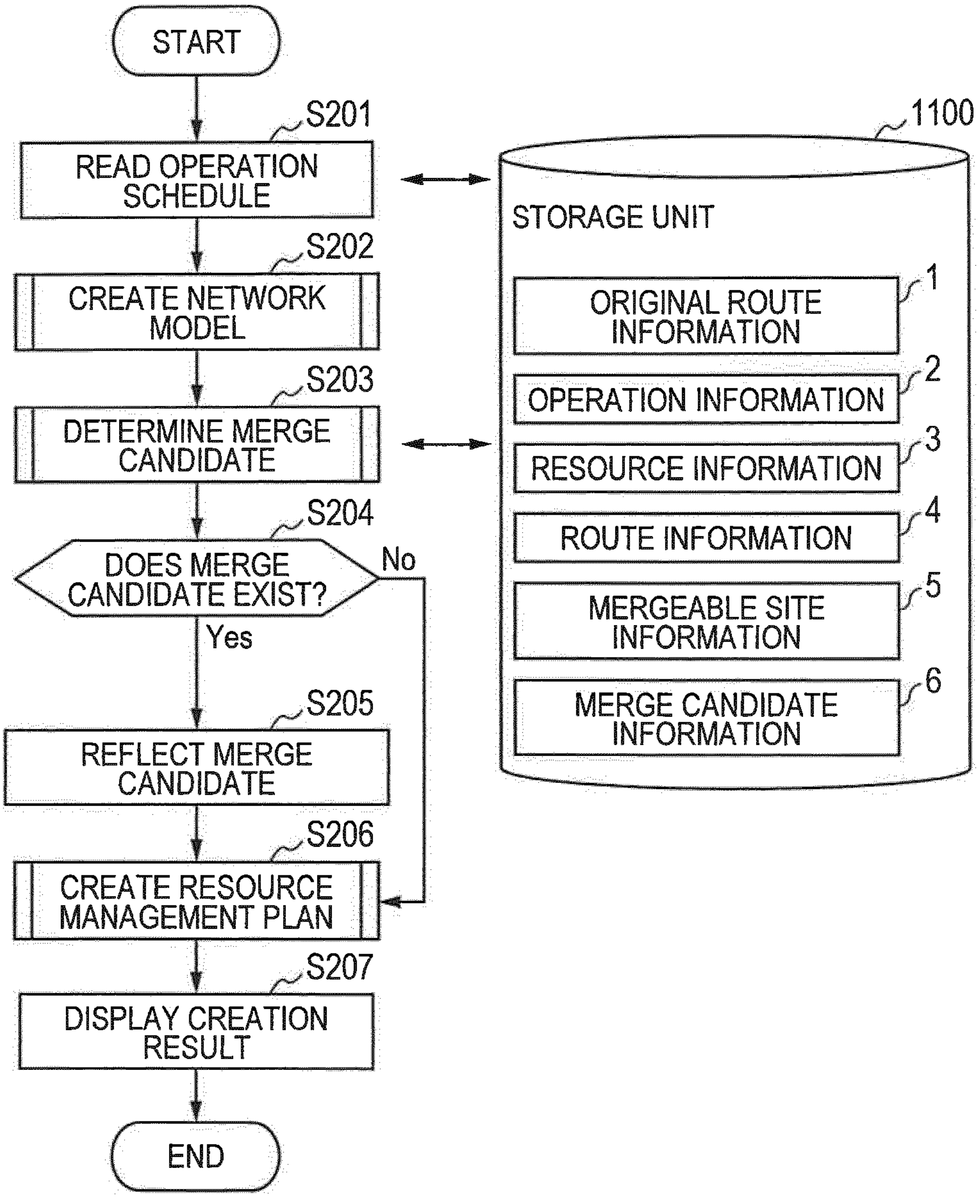
START
S201
READ OPERATION SCHEDULE
S202
CREATE NETWORK MODEL
S203
DETERMINE MERGE CANDIDATE
S204
DOES MERGE CANDIDATE EXIST?
No
Yes
S205
REFLECT MERGE CANDIDATE
S206
CREATE RESOURCE MANAGEMENT PLAN
S207
DISPLAY CREATION RESULT
END
1100
STORAGE UNIT
1
ORIGINAL ROUTE INFORMATION
2
OPERATION INFORMATION
3
RESOURCE INFORMATION
4
ROUTE INFORMATION
5
MERGEABLE SITE INFORMATION
6
MERGE CANDIDATE INFORMATION

FIG. 3A

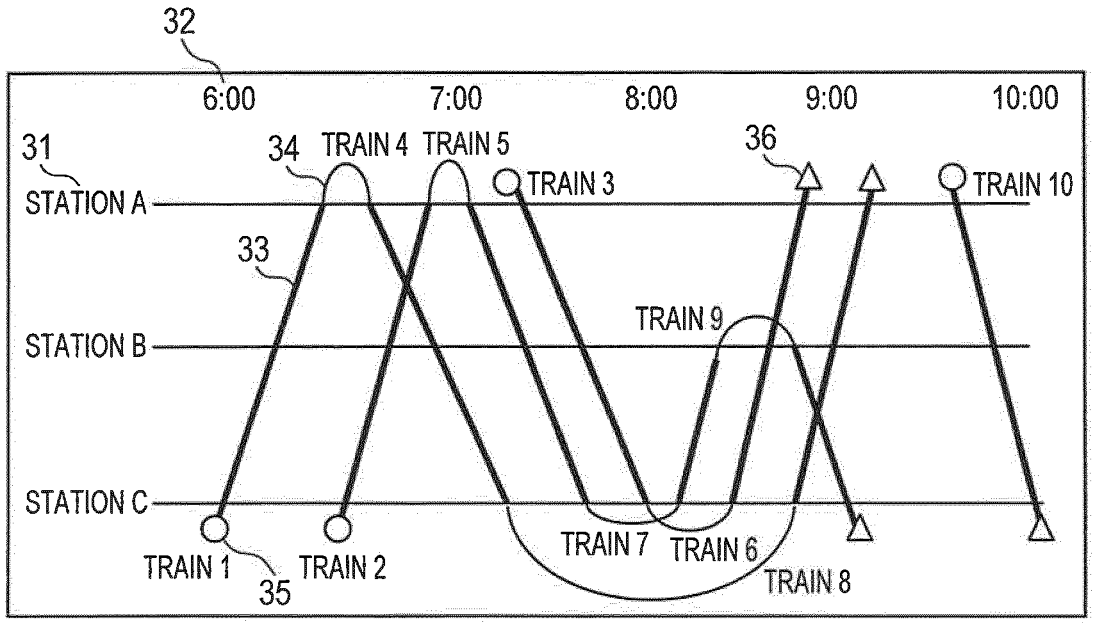
32
6:00
7:00
8:00
9:00
10:00
31
STATION A
34
TRAIN 4
TRAIN 5
TRAIN 3
36
TRAIN 10
33
STATION B
TRAIN 9
STATION C
TRAIN 1
35
TRAIN 2
TRAIN 7
TRAIN 6
TRAIN 8

FIG. 3B

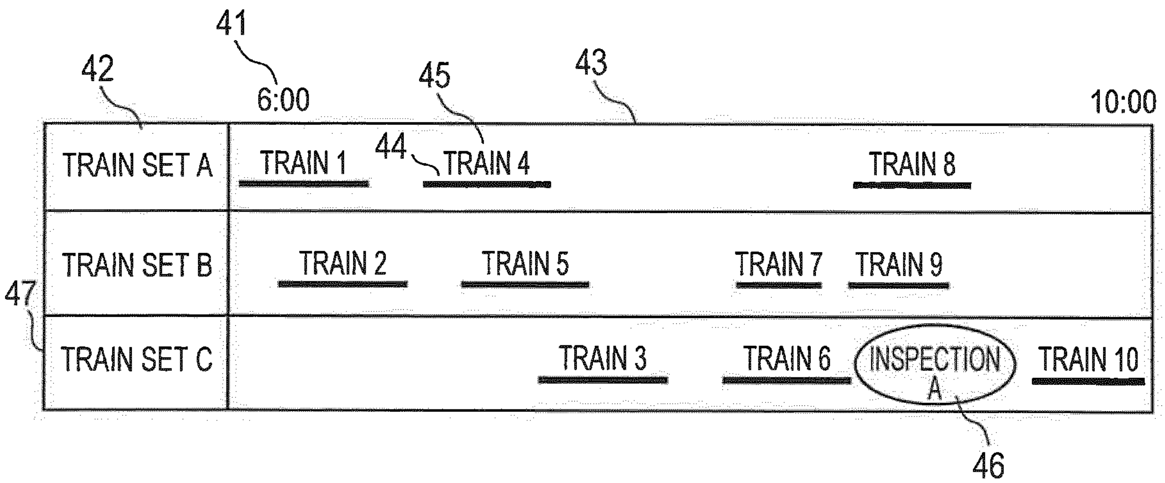
41
42
45
43
6:00
10:00
TRAIN SET A
TRAIN 1
44
TRAIN 4
TRAIN 8
TRAIN SET B
TRAIN 2
TRAIN 5
TRAIN 7
TRAIN 9
47
TRAIN SET C
TRAIN 3
TRAIN 6
INSPECTION A
TRAIN 10
46

FIG. 4

5

51 52 53

| MERGEABLE SITE INFORMATION | | |
|---|---|---|
| TARGET TRACK | MERGEABLE SITE | SEPARABLE SITE |
| TRACK A | A STATION, C STATION | C STATION |
| TRACK B | B STATION | B STATION |

54

FIG. 5

6

61 62 63

| MERGE CANDIDATE INFORMATION | | |
|---|---|---|
| MERGE SECTION | MERGE CANDIDATE | MERGEABLE NUMBER |
| A STATION → C STATION | TRAIN 5 | 2 |

64

FIG. 6

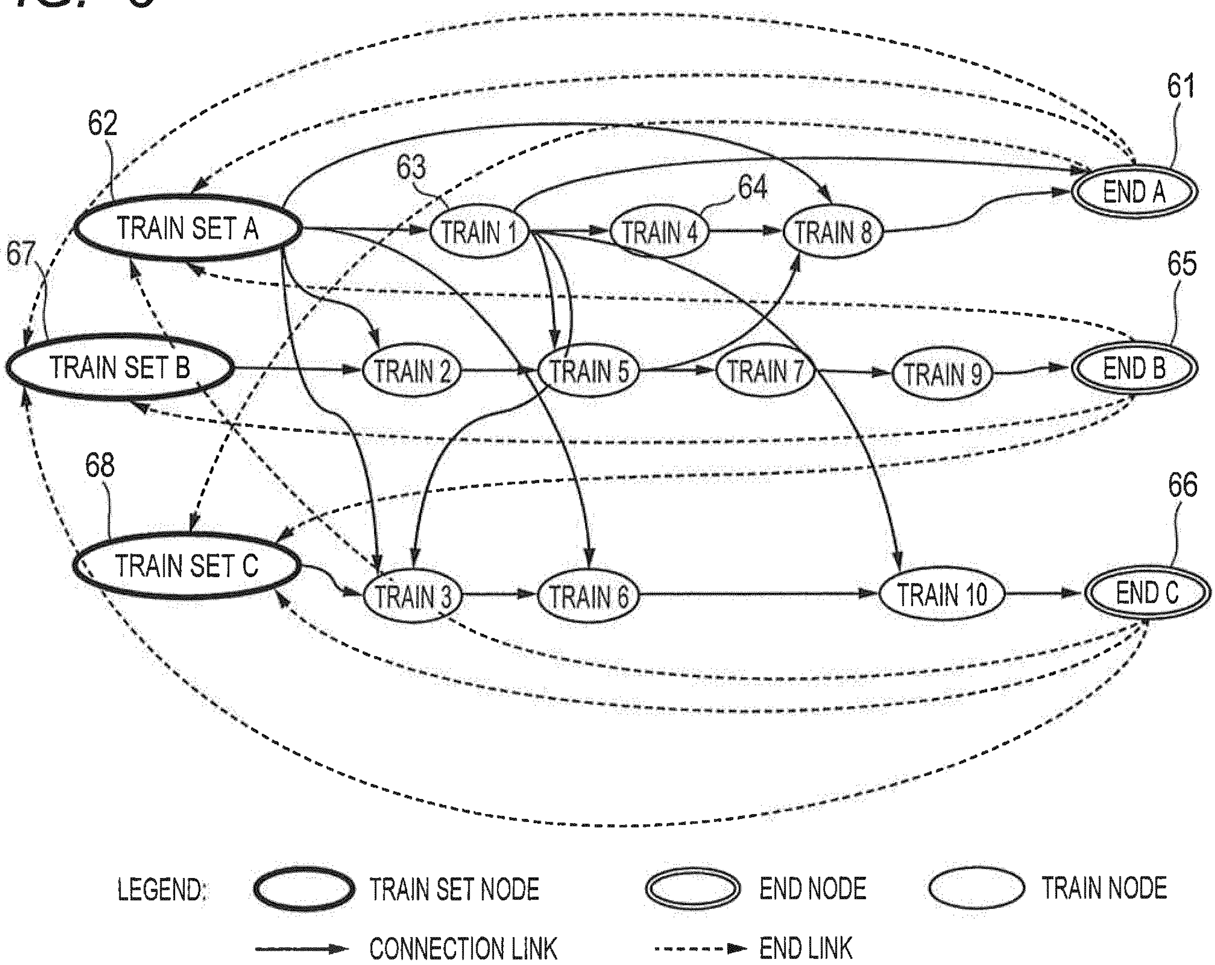
61
62
63
64
65
66
67
68
TRAIN SET A
TRAIN SET B
TRAIN SET C
TRAIN 1
TRAIN 2
TRAIN 3
TRAIN 4
TRAIN 5
TRAIN 6
TRAIN 7
TRAIN 8
TRAIN 9
TRAIN 10
END A
END B
END C
LEGEND:
TRAIN SET NODE
END NODE
TRAIN NODE
CONNECTION LINK
END LINK

FIG. 7

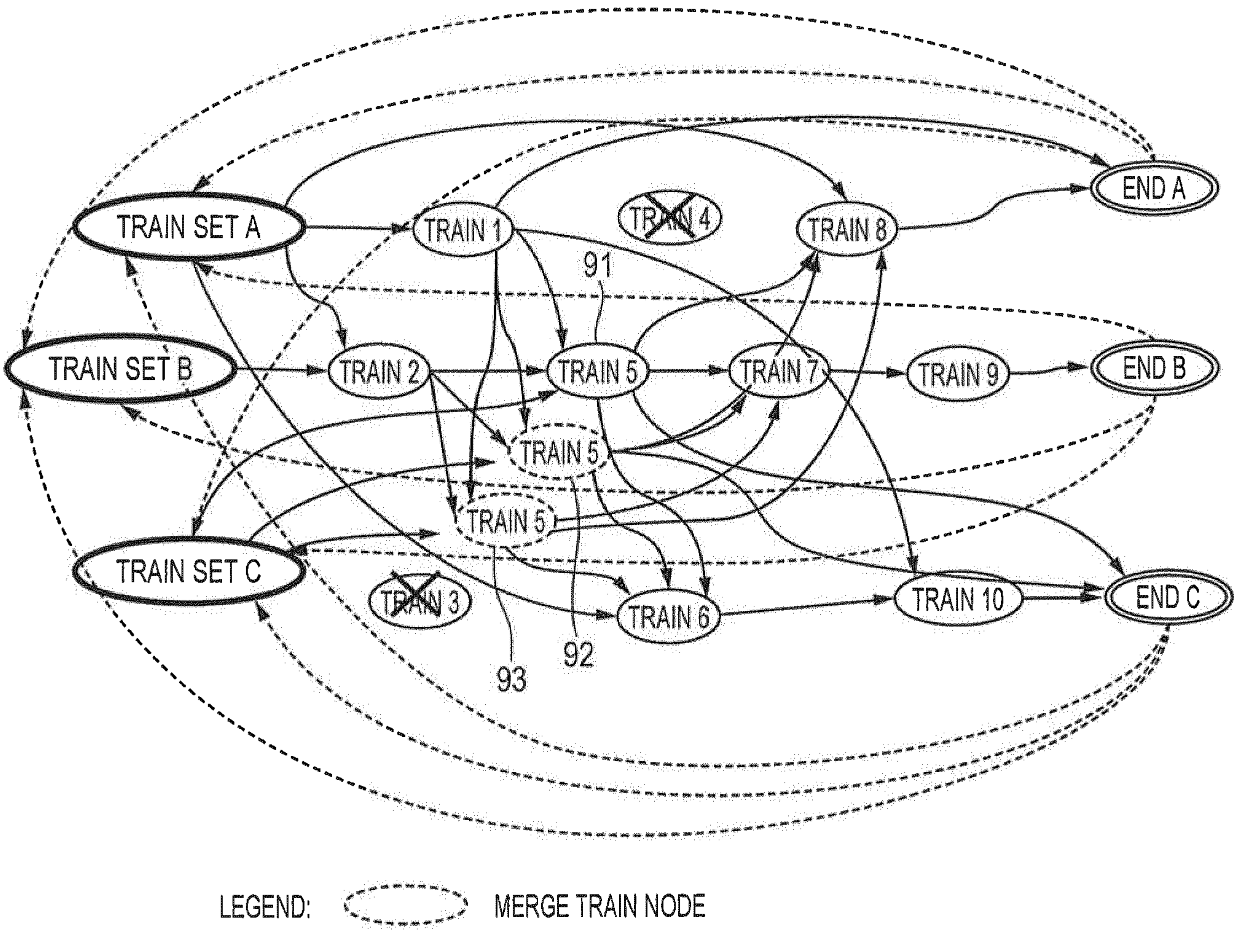
TRAIN SET A
TRAIN SET B
TRAIN SET C
TRAIN 1
TRAIN 2
TRAIN 3
TRAIN 4
TRAIN 5
TRAIN 5
TRAIN 5
TRAIN 6
TRAIN 7
TRAIN 8
TRAIN 9
TRAIN 10
END A
END B
END C
91
92
93
LEGEND:
MERGE TRAIN NODE

FIG. 8

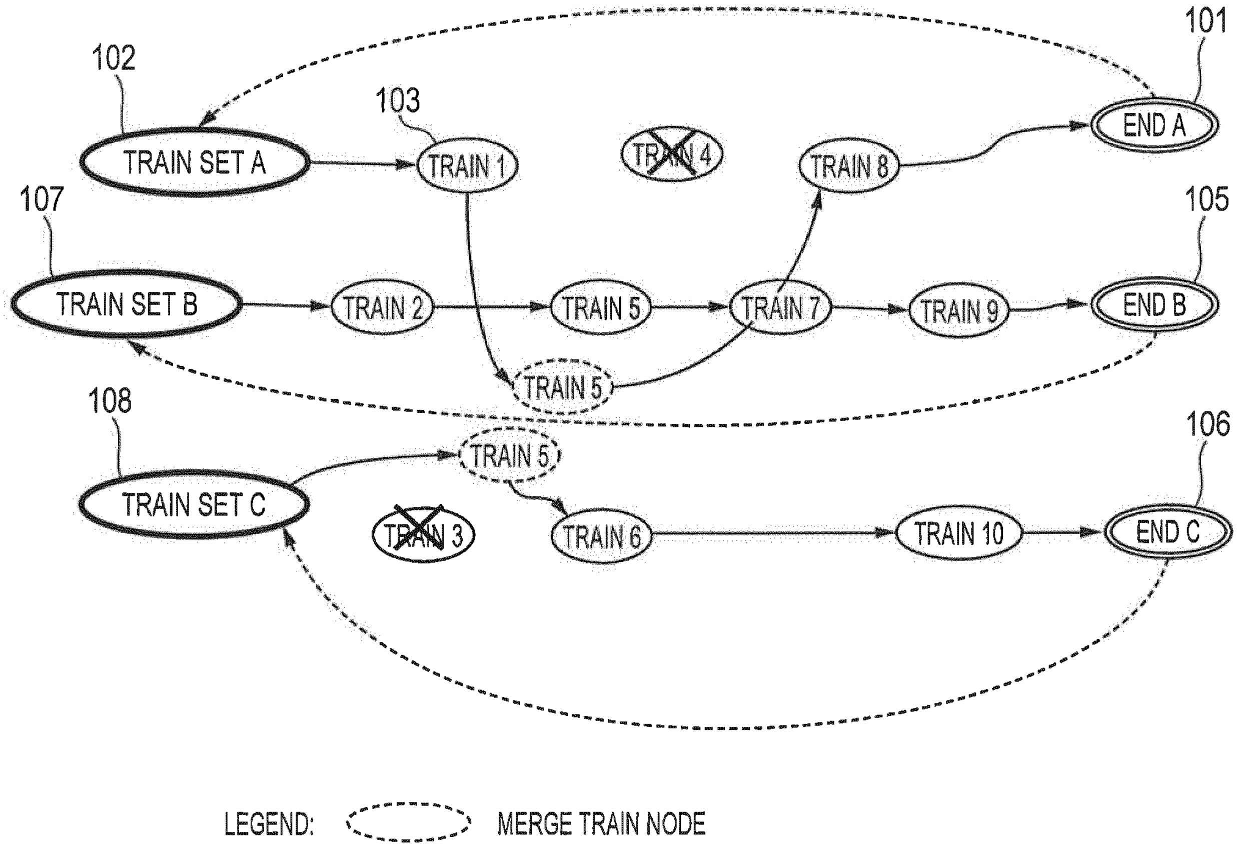
102
103
101
TRAIN SET A
TRAIN 1
TRAIN 4
TRAIN 8
END A
107
105
TRAIN SET B
TRAIN 2
TRAIN 5
TRAIN 7
TRAIN 9
END B
TRAIN 5
108
106
TRAIN 5
TRAIN SET C
TRAIN 3
TRAIN 6
TRAIN 10
END C
LEGEND:
MERGE TRAIN NODE

FIG. 9

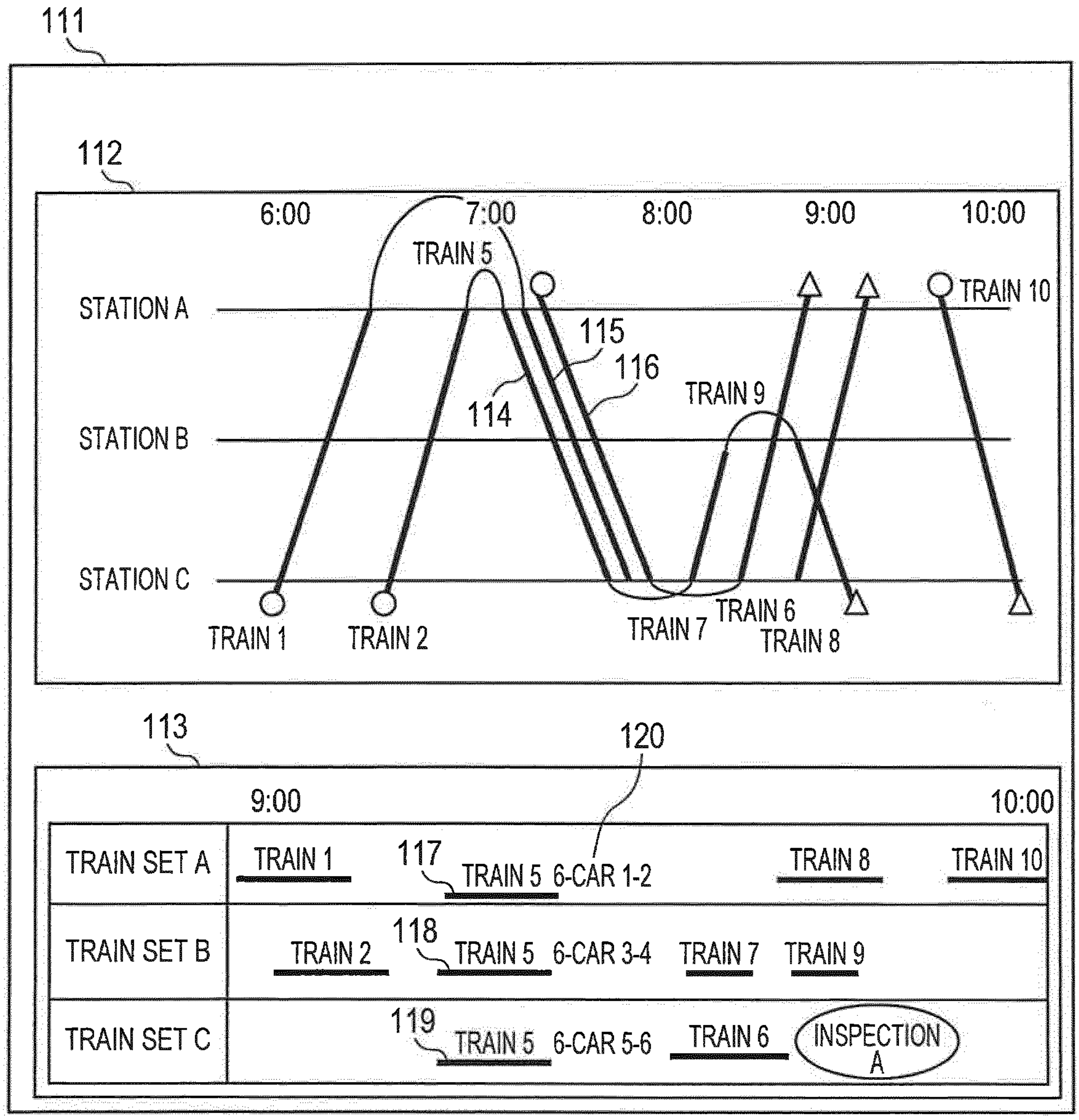
111
112
6:00
7:00
8:00
9:00
10:00
TRAIN 5
STATION A
STATION B
STATION C
115
116
114
TRAIN 9
TRAIN 10
TRAIN 1
TRAIN 2
TRAIN 7
TRAIN 6
TRAIN 8
113
120
9:00
10:00
TRAIN SET A
TRAIN 1
117
TRAIN 5 6-CAR 1-2
TRAIN 8
TRAIN 10
TRAIN SET B
TRAIN 2
118
TRAIN 5 6-CAR 3-4
TRAIN 7
TRAIN 9
TRAIN SET C
119
TRAIN 5 6-CAR 5-6
TRAIN 6
INSPECTION A

FIG. 10

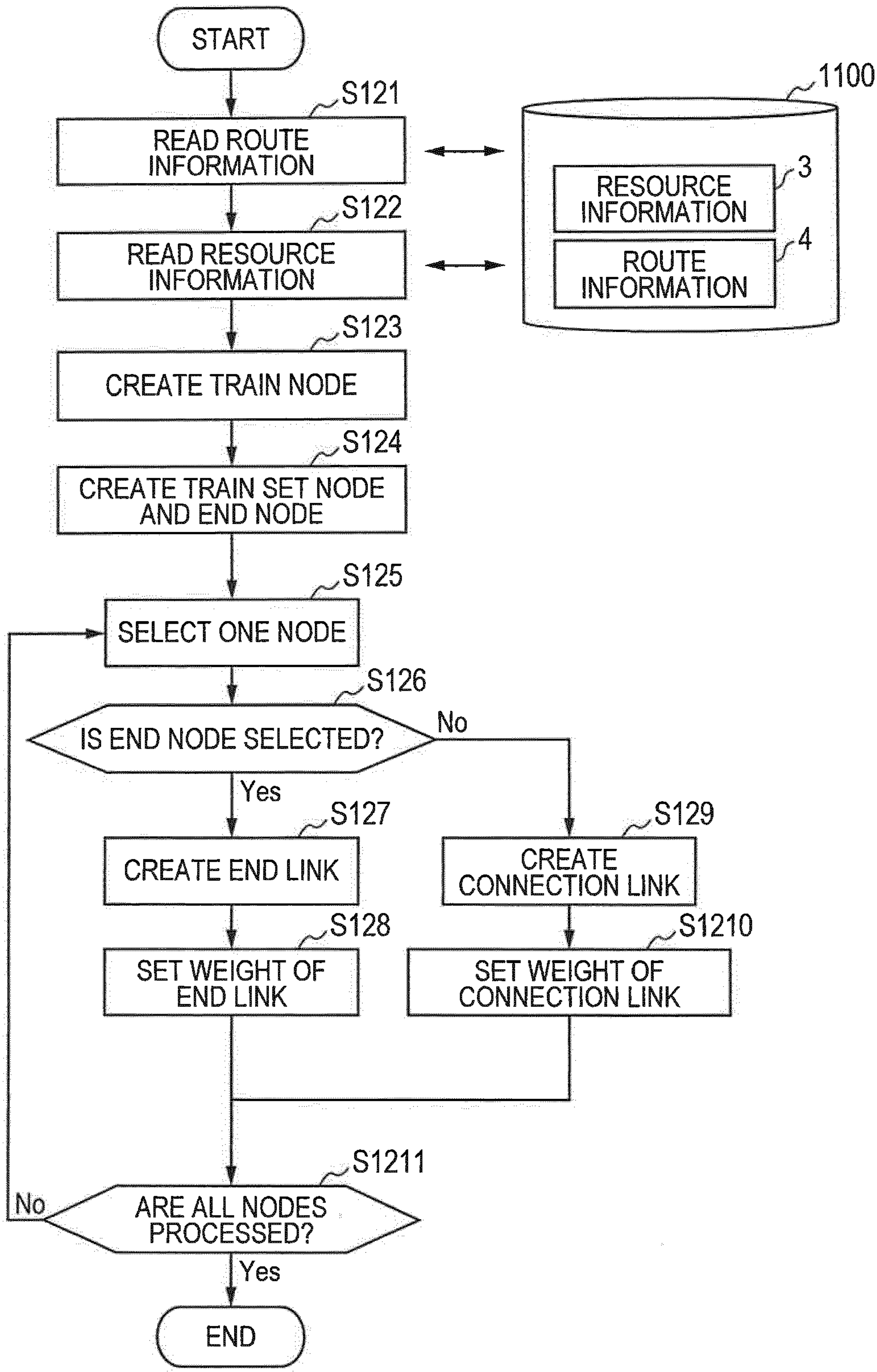
START
S121
READ ROUTE INFORMATION
S122
READ RESOURCE INFORMATION
S123
CREATE TRAIN NODE
S124
CREATE TRAIN SET NODE AND END NODE
S125
SELECT ONE NODE
S126
IS END NODE SELECTED?
Yes
No
S127
CREATE END LINK
S128
SET WEIGHT OF END LINK
S129
CREATE CONNECTION LINK
S1210
SET WEIGHT OF CONNECTION LINK
S1211
ARE ALL NODES PROCESSED?
No
Yes
END
1100
3
RESOURCE INFORMATION
4
ROUTE INFORMATION

FIG. 11

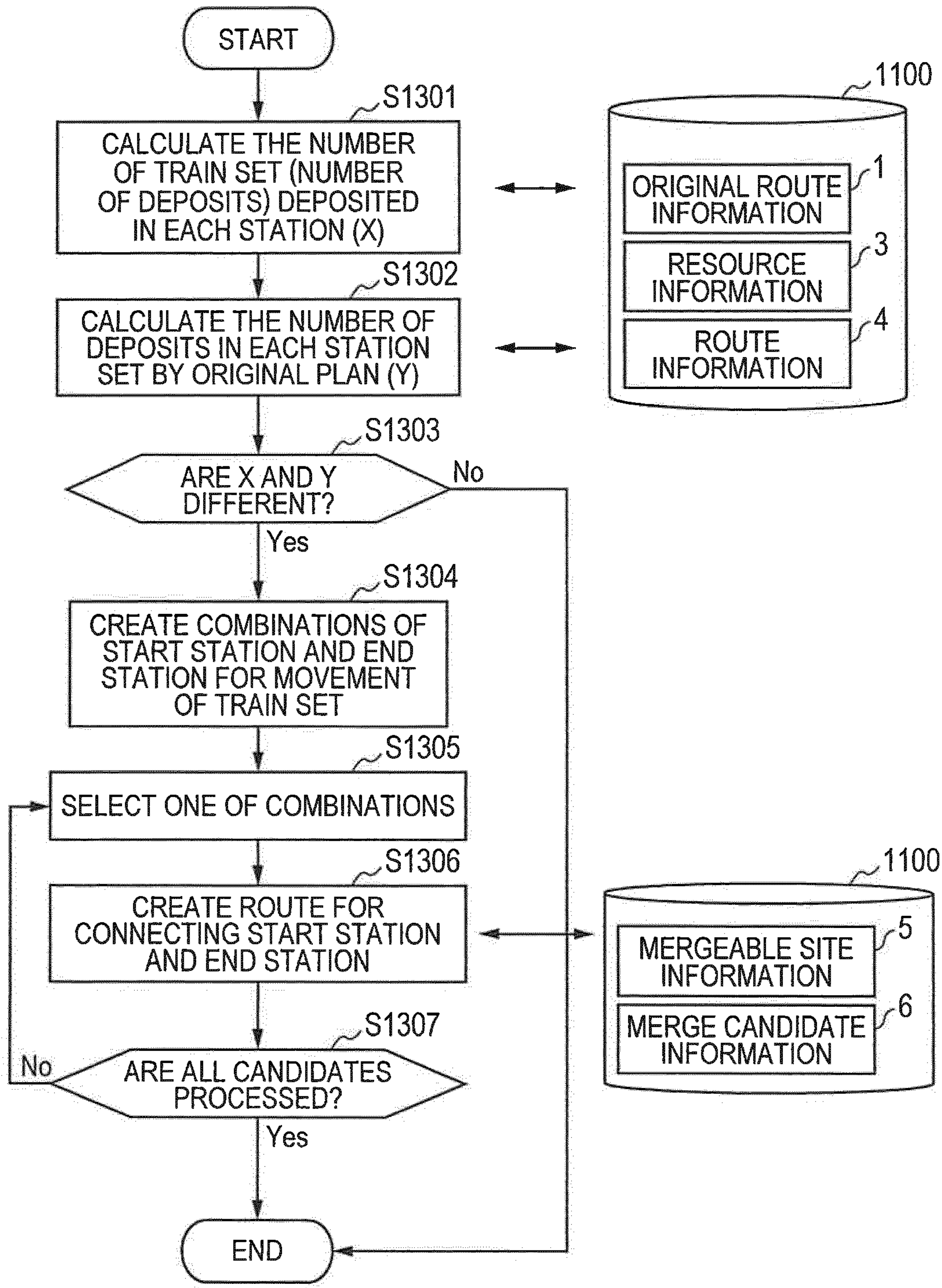
START
S1301
CALCULATE THE NUMBER OF TRAIN SET (NUMBER OF DEPOSITS) DEPOSITED IN EACH STATION (X)
S1302
CALCULATE THE NUMBER OF DEPOSITS IN EACH STATION SET BY ORIGINAL PLAN (Y)
S1303
ARE X AND Y DIFFERENT?
No
Yes
S1304
CREATE COMBINATIONS OF START STATION AND END STATION FOR MOVEMENT OF TRAIN SET
S1305
SELECT ONE OF COMBINATIONS
S1306
CREATE ROUTE FOR CONNECTING START STATION AND END STATION
S1307
ARE ALL CANDIDATES PROCESSED?
No
Yes
END
1100
ORIGINAL ROUTE INFORMATION
1
RESOURCE INFORMATION
3
ROUTE INFORMATION
4
1100
MERGEABLE SITE INFORMATION
5
MERGE CANDIDATE INFORMATION
6

FIG. 12A

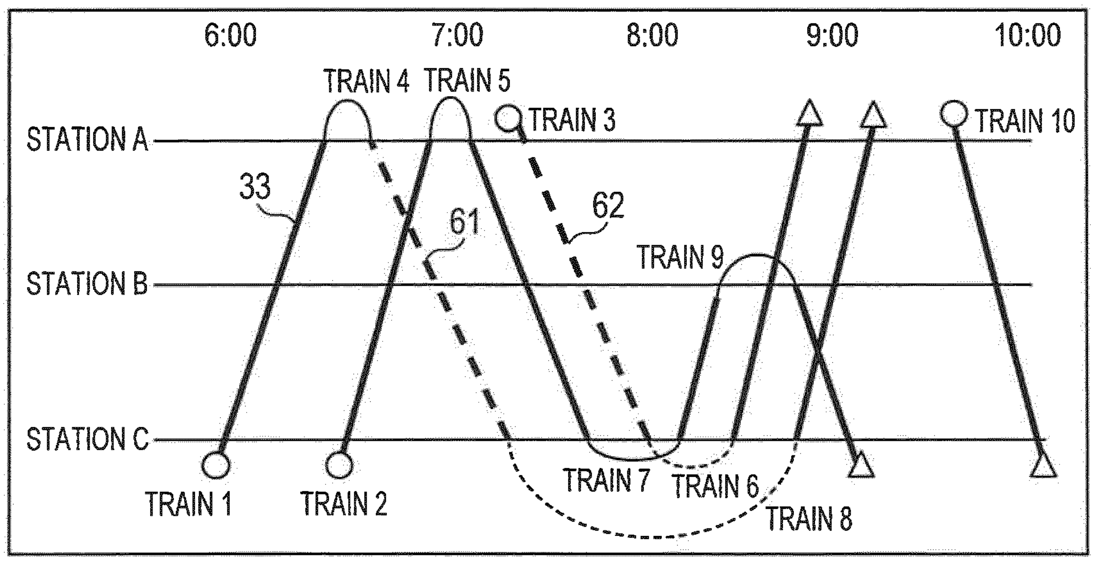


FIG. 12B

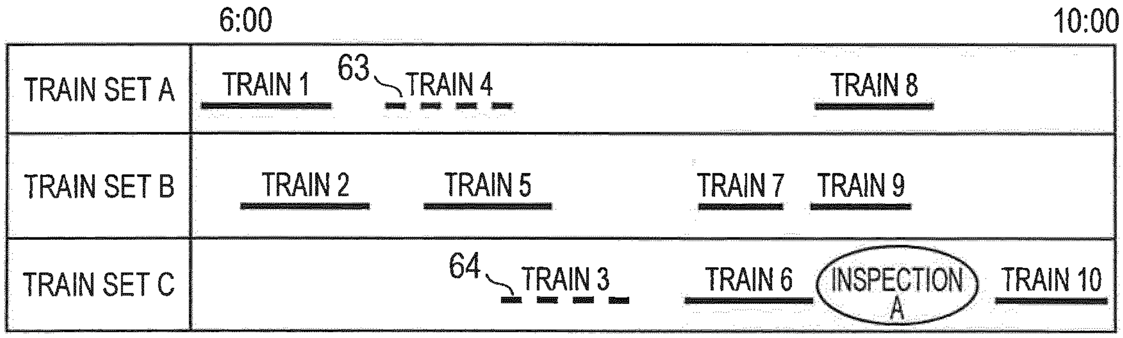

FIG. 13

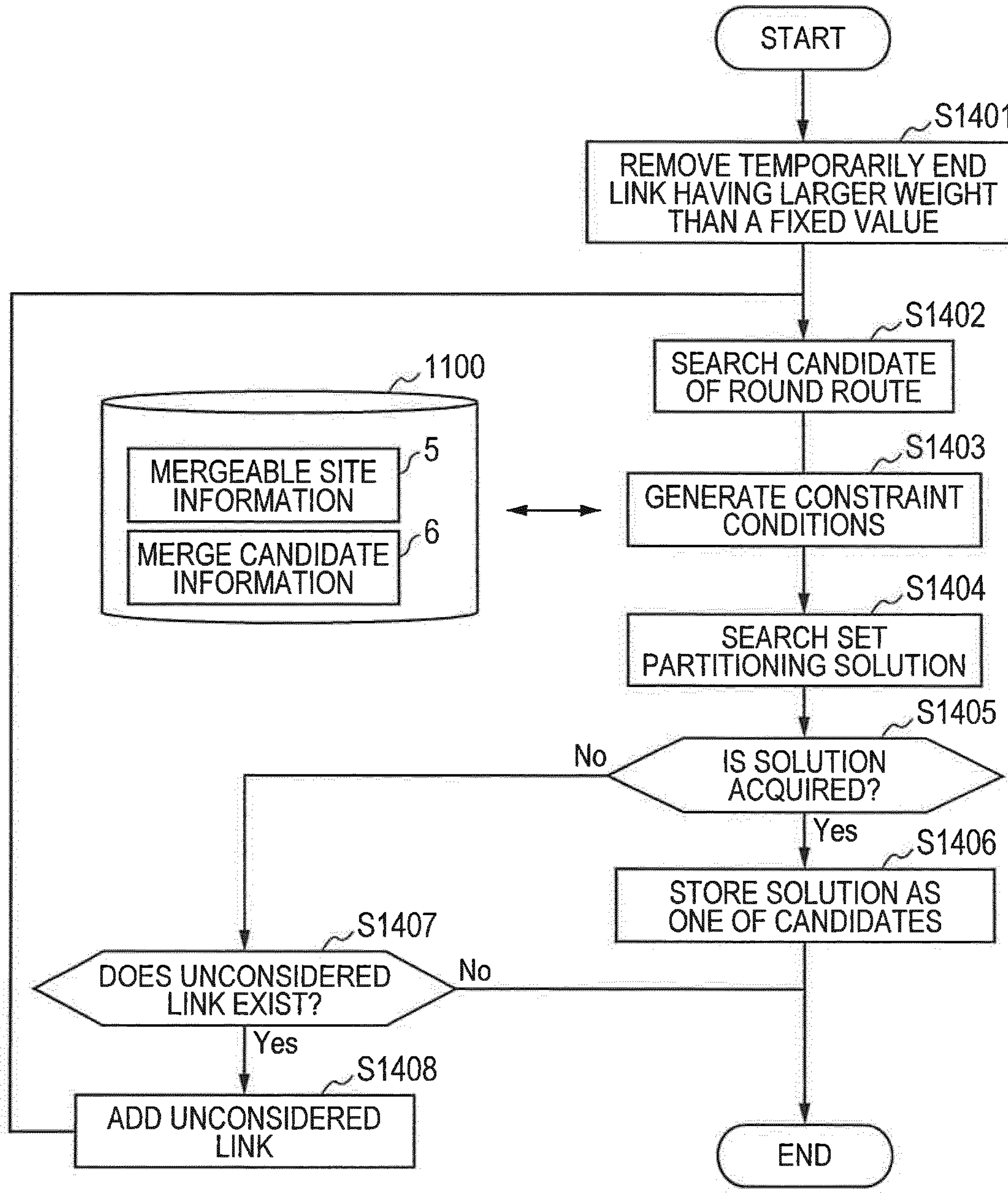
START
S1401
REMOVE TEMPORARILY END LINK HAVING LARGER WEIGHT THAN A FIXED VALUE
S1402
SEARCH CANDIDATE OF ROUND ROUTE
1100
MERGEABLE SITE INFORMATION
5
MERGE CANDIDATE INFORMATION
6
S1403
GENERATE CONSTRAINT CONDITIONS
S1404
SEARCH SET PARTITIONING SOLUTION
S1405
IS SOLUTION ACQUIRED?
No
Yes
S1406
STORE SOLUTION AS ONE OF CANDIDATES
S1407
DOES UNCONSIDERED LINK EXIST?
No
Yes
S1408
ADD UNCONSIDERED LINK
END

FIG. 14

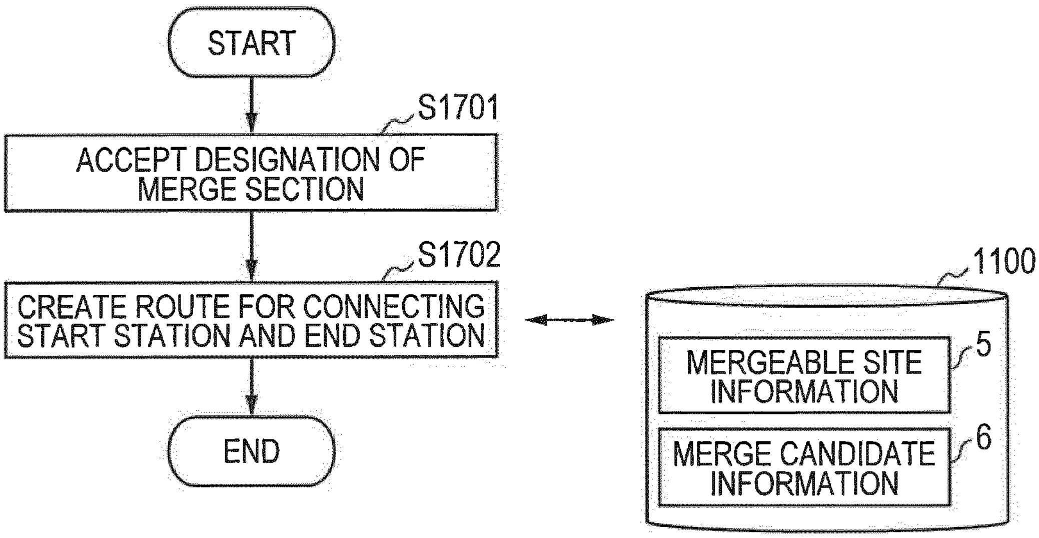


FIG. 15A

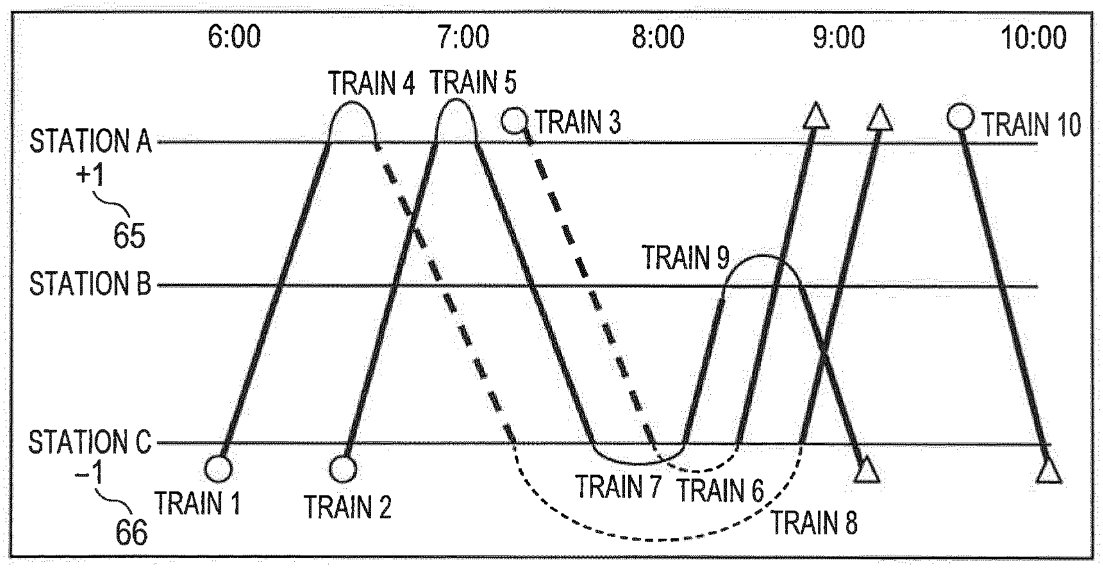

# FIG. 15B

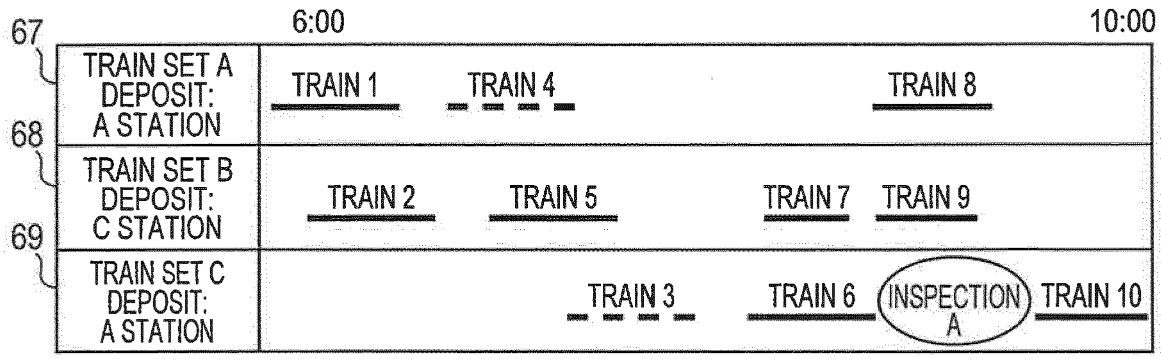
67
68
69
6:00
10:00
TRAIN SET A DEPOSIT: A STATION
TRAIN 1
TRAIN 4
TRAIN 8
TRAIN SET B DEPOSIT: C STATION
TRAIN 2
TRAIN 5
TRAIN 7
TRAIN 9
TRAIN SET C DEPOSIT: A STATION
TRAIN 3
TRAIN 6
INSPECTION A
TRAIN 10

FIG. 16

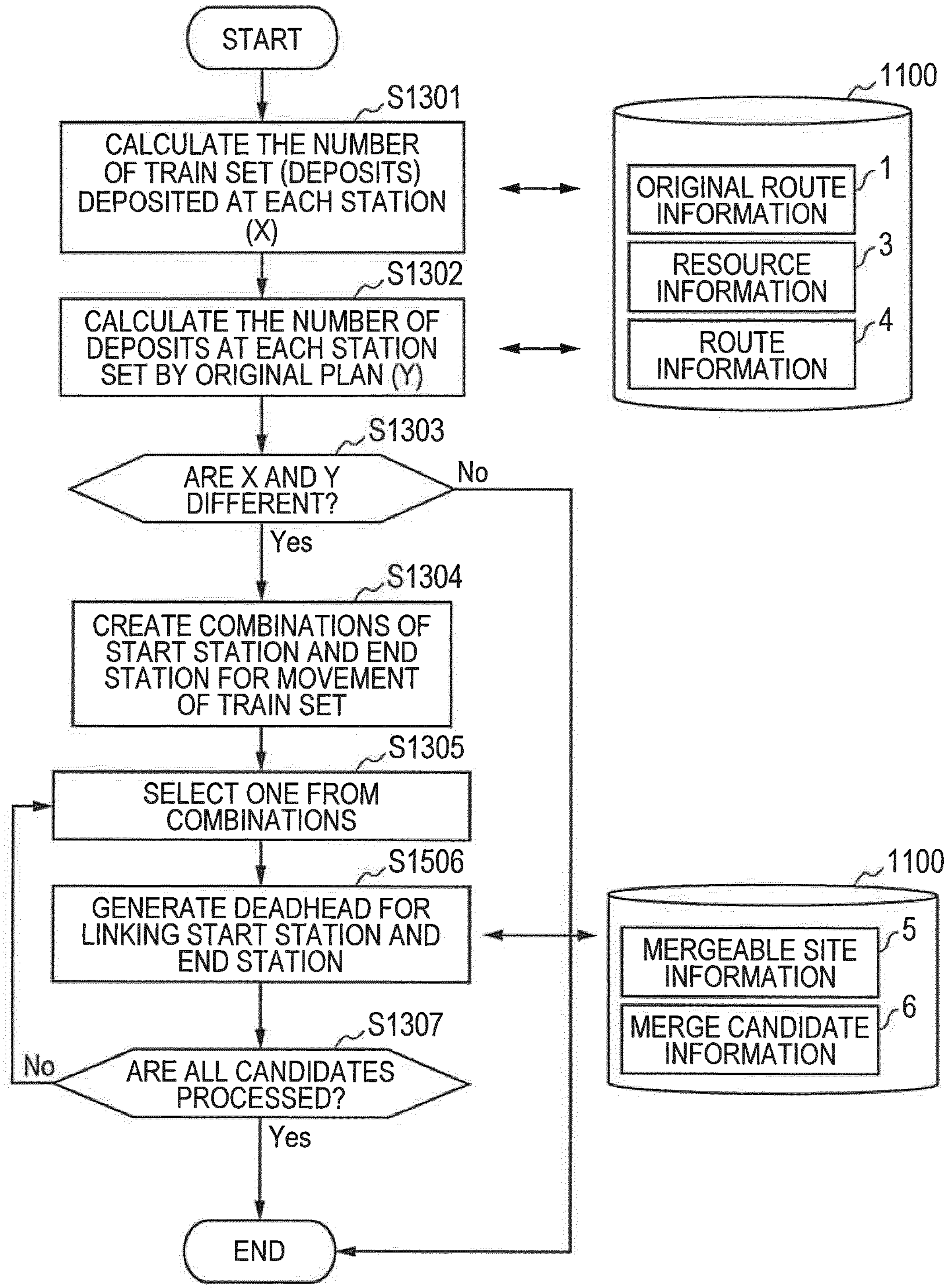
START
S1301
CALCULATE THE NUMBER OF TRAIN SET (DEPOSITS) DEPOSITED AT EACH STATION (X)
S1302
CALCULATE THE NUMBER OF DEPOSITS AT EACH STATION SET BY ORIGINAL PLAN (Y)
S1303
ARE X AND Y DIFFERENT?
No
Yes
S1304
CREATE COMBINATIONS OF START STATION AND END STATION FOR MOVEMENT OF TRAIN SET
S1305
SELECT ONE FROM COMBINATIONS
S1506
GENERATE DEADHEAD FOR LINKING START STATION AND END STATION
S1307
ARE ALL CANDIDATES PROCESSED?
No
Yes
END
1100
ORIGINAL ROUTE INFORMATION
1
RESOURCE INFORMATION
3
ROUTE INFORMATION
4
1100
MERGEABLE SITE INFORMATION
5
MERGE CANDIDATE INFORMATION
6

FIG. 17

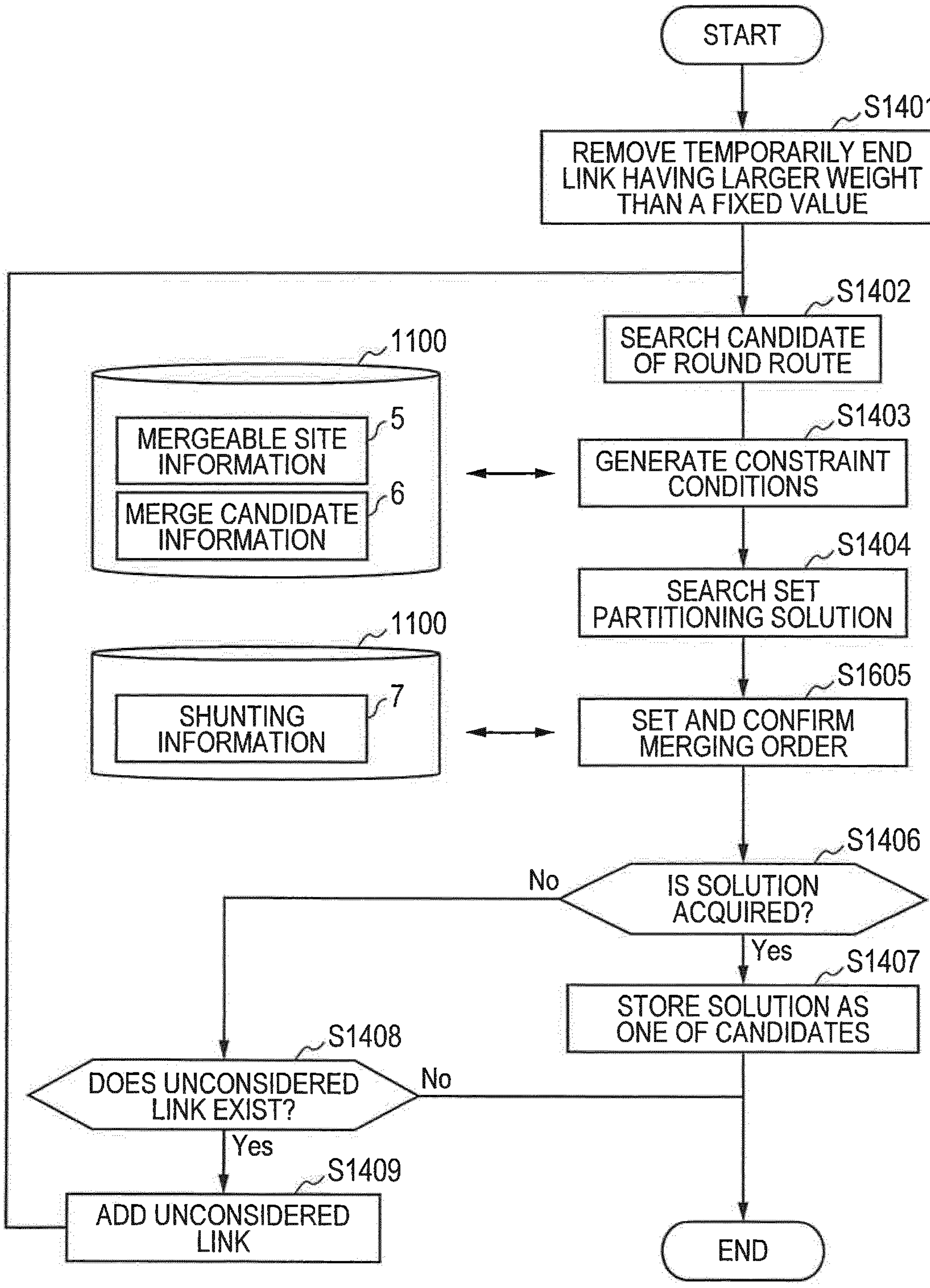
START
S1401
REMOVE TEMPORARILY END LINK HAVING LARGER WEIGHT THAN A FIXED VALUE
S1402
SEARCH CANDIDATE OF ROUND ROUTE
1100
MERGEABLE SITE INFORMATION
5
MERGE CANDIDATE INFORMATION
6
S1403
GENERATE CONSTRAINT CONDITIONS
S1404
SEARCH SET PARTITIONING SOLUTION
1100
SHUNTING INFORMATION
7
S1605
SET AND CONFIRM MERGING ORDER
S1406
IS SOLUTION ACQUIRED?
No
Yes
S1407
STORE SOLUTION AS ONE OF CANDIDATES
S1408
DOES UNCONSIDERED LINK EXIST?
No
Yes
S1409
ADD UNCONSIDERED LINK
END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010058771 A
- JP 2005259052 A
- JP 2003154939 A
- JP 2010285053 A


### Non-patent literature cited in the description


- **KEISUKE SATO ; NAOTO FUKUMURA.** Freight Train Locomotive Rescheduling Problem after Disruptions. *IPSJ SIG Notes 2009,* 26 February 2009, vol. 19, 141-144